(19) **Europäisches Patentamt**
**European Patent Office**
**Office européen des brevets**

(11) **EP 4 356 976 A1**

(12) **EUROPEAN PATENT APPLICATION**

(43) Date of publication:
**24.04.2024 Bulletin 2024/17**

(21) Application number: **23198472.5**

(22) Date of filing: **20.09.2023**

(51) International Patent Classification (IPC):
**A62B 9/00** *(2006.01)* **A62B 18/08** *(2006.01)*
**A62B 19/00** *(2006.01)* **A62B 23/02** *(2006.01)*
**A62B 27/00** *(2006.01)*

(52) Cooperative Patent Classification (CPC):
**A62B 9/006; A41D 13/11; A62B 18/088;**
**A62B 19/00; A62B 23/02; A62B 27/00**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **20.10.2022 CN 202211288608**

(71) Applicant: **Honeywell International Inc.**
**Charlotte, NC 28202 (US)**

(72) Inventors:
• **CHEN, En Yi**
**Charlotte, 28202 (US)**
• **HAN, Xiaojin**
**Charlotte, 28202 (US)**

(74) Representative: **Haseltine Lake Kempner LLP**
**Cheapside House**
**138 Cheapside**
**London EC2V 6BJ (GB)**

(54) **APPARATUS AND METHOD FOR FILTER LIFETIME ESTIMATION IN RESPIRATORY PROTECTIVE DEVICE**

(57) Various embodiments are directed to methods and apparatuses for determining a remaining lifespan value for a filter component configured for use in a respiratory protective device. In various embodiments, the method comprises determining a net volatility associated with a dispersing element of a filter component of a respiratory protective device; and based at least in part on the net volatility associated with the dispersing element, determining a remaining lifespan value for the filter component; wherein the net volatility associated with the dispersing element is determined based at least in part on one or more approximation algorithms defined according to one or more operational characteristics associated with the respiratory protective device. In various embodiments, the net volatility associated with the dispersing element is determined based on a plurality of approximation algorithms defined according to a respective plurality of operational characteristics associated with the respiratory protective device.

FIG. 1

EP 4 356 976 A1

**Description**

FIELD OF THE INVENTION

Example embodiments of the present disclosure relate generally to respiratory protective devices and, more particularly, to a filtration component with a dispersing element container for respiratory protective devices.

BACKGROUND

Applicant has identified many technical challenges and difficulties associated with respiratory protective devices. For example, there is a lack of effective methods to evaluate the performance of respiratory protective devices and estimate the remaining lifespan of various components of the respiratory protective devices. Through applied effort, ingenuity, and innovation, Applicant has solved problems related to these respiratory protective devices embodied in the present disclosure, which are described in detail below.

BRIEF SUMMARY

Various embodiments are directed to respiratory protective devices and methods of using the same. In various embodiments, a method of determining a remaining lifespan value for a filter component having a dispersing element configured for use in a respiratory protective device may comprise determining a net volatility associated with a dispersing element of a filter component of a respiratory protective device; and

based at least in part on the net volatility associated with the dispersing element, determining a remaining lifespan value for the filter component; wherein the net volatility associated with the dispersing element is determined based at least in part on one or more approximation algorithms defined according to one or more operational characteristics associated with the respiratory protective device.

In various embodiments, the method may further comprise capturing operational data associated with the respiratory protective device at a first instance, wherein the operational data is defined by the one or more operational characteristics. In certain embodiments, the operational data may be captured by one or more sensor components defined by the respiratory protective device. In various embodiments, the one or more operational characteristics may comprise one or more of a temperature value, a humidity value, and an air flow value. In various embodiments, the net volatility associated with the dispersing element may be determined based at least in part on a plurality of approximation algorithms defined according to a respective plurality of operational characteristics associated with the respiratory protective device.

In various embodiments, the method may further comprise recording the remaining lifespan value associated with the dispersing element at a near-field communication element of the filter component. In certain embodiments, the method may further comprise identifying a lapsed lifespan condition associated with the dispersing element based at least in part on the remaining lifespan value recorded at the near-field communication element; and upon identifying the lapsed lifespan condition associated with the dispersing element, generating an alert signal configured to provide an indication of the lapsed lifespan condition associated with the dispersing element. In various embodiments, the net volatility associated with the dispersing element may be defined at least in part by a first net volatility associated with a first instance, the first net volatility being defined at least in part by a first net evaporation flux, a first humidity influence factor, and an air flow influence factor. In certain embodiments, the method may further comprise calculating the net evaporation flux based at least in part on a first temperature value corresponding to the first instance and a first approximation algorithm; calculating the humidity influence factor based at least in part on a first humidity value corresponding to the first instance and a second approximation algorithm; and calculating the air flow influence factor based at least in part on a first air flow value corresponding to the first instance and a third approximation algorithm. Further, in certain embodiments, the first humidity influence factor may be defined by a ratio of an estimated net evaporation flux defined at the first humidity value to a baseline net evaporation flux defined at a baseline humidity value, wherein the estimated net evaporation flux is determined using the second approximation algorithm.

Various embodiments are directed to a respiratory protective device. In various embodiments, a respiratory protective device may comprise a filtration component comprising: a filter body; and a dispersing element container configured for arrangement relative to the filter body, the dispersing element container being further configured for storing a dispersing element therein; wherein the filter component is configured such that at least a portion of the dispersing element is dispersed from the dispersing element container during operation of the filter component; and a controller configured to: determine a net volatility associated with the dispersing element of the filter component of the respiratory protective device; and based at least in part on the net volatility associated with the dispersing element, determine a remaining lifespan value for the filter component; wherein the controller is configured to determine the net volatility associated with the dispersing element based at least in part on one or more approximation algorithms defined according to one or more operational characteristics associated with the respiratory protective device.

In various embodiments, the respiratory protective device may be configured to capture operational data associated with the respiratory protective device at a first instance, the operational data being defined by the one or more operational characteristics. In certain embodiments, the operational data may be captured by one or more sensor components defined by the respiratory protective device. In various embodiments, the one or more operational characteristics may comprise one or more of a temperature value, a humidity value, and an air flow value. In various embodiments, the controller may be configured to determine the net volatility associated with the dispersing element based at least in part on a plurality of approximation algorithms defined according to a respective plurality of operational characteristics associated with the respiratory protective device.

In various embodiments, the controller may be configured to record the remaining lifespan value associated with the dispersing element at a near-field communication element of the filter component. In certain embodiments, the controller may be further configured to: identify a lapsed lifespan condition associated with the dispersing element based at least in part on the remaining lifespan value recorded at the near-field communication element; and, upon identifying the lapsed lifespan condition associated with the dispersing element, generate an alert signal configured to provide an indication of the lapsed lifespan condition associated with the dispersing element.

In various embodiments, the net volatility associated with the dispersing element may be defined at least in part by a first net volatility associated with a first instance, the first net volatility being defined at least in part by a first net evaporation flux, a first humidity influence factor, and an air flow influence factor. In certain embodiments, the controller may be further configured to: calculate the net evaporation flux based at least in part on a first temperature value corresponding to the first instance and a first approximation algorithm; calculate the humidity influence factor based at least in part on a first humidity value corresponding to the first instance and a second approximation algorithm; and calculate the air flow influence factor based at least in part on a first air flow value corresponding to the first instance and a third approximation algorithm. In various embodiments, the first humidity influence factor may be defined by a ratio of an estimated net evaporation flux defined at the first humidity value to a baseline net evaporation flux defined at a baseline humidity value, and wherein the controller is configured to determine the estimated net evaporation flux using the second approximation algorithm.

BRIEF DESCRIPTION OF THE DRAWINGS

Reference will now be made to the accompanying drawings, which are not necessarily drawn to scale, and wherein:

FIG. 1 illustrates an example perspective view of an example respiratory protective device in accordance with some example embodiments described herein;

FIG. 2A illustrates an example exploded view of an example mask component in accordance with some example embodiments described herein;

FIG. 2B illustrates another example exploded view of an example mask component in accordance with some example embodiments described herein;

FIG. 2C illustrates another example exploded view of an example mask component in accordance with some example embodiments described herein;

FIG. 2D illustrates an example back view of an example mask component in accordance with some example embodiments described herein;

FIG. 3 illustrates an example circuit diagram of an example respiratory protective device in accordance with some example embodiments described herein;

FIG. 4A illustrates an example perspective view of an example filtration component for an example respiratory protective device in accordance with some example embodiments described herein;

FIG. 4B illustrates another example perspective view of the example filtration component shown in FIG. 4A in accordance with some example embodiments described herein;

FIG. 4C illustrates another example perspective view of the example filtration component shown in FIG. 4A in accordance with some example embodiments described herein;

FIG. 4D illustrates an example exploded view of the example filtration component shown in FIG. 4A in accordance with some example embodiments described herein;

FIG. 4E illustrates some example elements of the example filtration component shown in FIG. 4A in accordance with some example embodiments described herein;

FIG. 5 illustrates an example block diagram of a respiratory protective device evaluation environment in accordance with some example embodiments described herein;

FIG. 6 illustrates an example method for determining a remaining lifespan value for a filter component in accordance with some example embodiments described herein;

FIG. 7 illustrates an example method for determining a net volatility associated with a dispersing element in accordance with some example embodiments described herein;

FIG. 8 illustrates an example method for determining a remaining lifespan value for a filter component in accordance with some example embodiments described herein; and

FIG. 9 illustrates an exemplary graphical representation of an exemplary approximation algorithm in accordance with various embodiments.

DETAILED DESCRIPTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The term "electronically coupled," "electronically coupling," "electronically couple," "in communication with," "in electronic communication with," or "connected" in the present disclosure refers to two or more elements or components being connected through wired means and/or wireless means, such that signals, electrical voltage/current, data and/or information may be transmitted to and/or received from these elements or components.

Respiratory protective devices (such as, but not limited to, masks, respirators, and/or the like) can protect our health, especially in the COVID-19 pandemic. For example, wearing a respiratory protective device can help slow the spread of the virus, and people are recommended or required to wear masks in indoor public places and outdoors where there is a high risk of COVID-19 transmission (such as crowded events or large gatherings).

As described above, many respiratory protective devices do not provide any mechanism for incorporating dispersing elements, and there is a need for an improved filter design that keeps a dispersing element sealed within the filter and provides a long dispersing effect. The present invention includes a respiratory protective device having a filter component that comprises a dispersing element. By incorporating the dispersing element in the example filtration component, an ecosystem for dispersing elements is created, as different manufacturing partners for the dispersing element can provide their own dispersing elements to be used in the example filtration component. For example, the dispersing elements can be used to provide health value. For example, a dispersing element can contain medicated vapors (such as VICKs) that enter the nose and mouth, which can start working in minutes to soothe coughs for easier breathing. The dispersing element can also provide scents to bring joy, relaxation or a sense of escape, thereby providing economic and social values. Additionally, various embodiments of the present disclosure can be distinguished from counterfeit products through the NFC tag ring, and improve the user experience as the dispersing element container is very small.

Further, many respiratory protective devices having filter components that utilize dispersing elements do not provide any mechanism for accurately detecting the remaining lifespan of the filter component, as the wide variety of dispersing elements available for use in respiratory protective devices and the effect that operational (e.g., environmental) characteristics associated with the respiratory protective device have on the dispersing element introduces additional complexities the obfuscate the remaining lifespan determination.

Various embodiments of the present disclosure overcome these technical challenges and difficulties. For example, various embodiments of the present disclosure provide methods and apparatuses for determining the remaining lifespan value of a dispersing element of a filter component based on a net volatility associated with the dispersing element that is determined using one or more approximation algorithms in conjunction with one or more operational characteristics associated with the respiratory protective device.

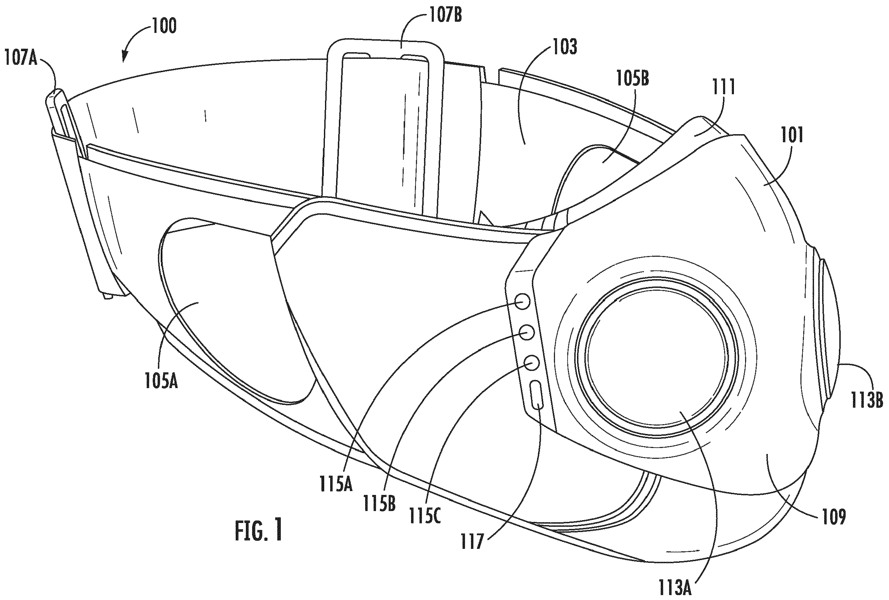

Referring now to FIG. 1, an example perspective view of an example respiratory protective device (also referred to as a respiratory protective equipment) 100 in accordance with some example embodiments described herein is illustrated.

In some embodiments, the example respiratory protective device 100 is in the form of a respirator or a mask. For example, as shown in FIG. 1, the example respiratory protective device 100 comprises a mask component 101 and a strap component 103.

In some embodiments, the strap component 103 may be in the form of a mask strap. For example, in some embodiments, the strap component 103 may comprise elastic material(s) such as, but not limited to, polymers, thermoplastic elastomer (TPE), and/or the like. In some embodiments, the elastic material may allow the example respiratory protective device 100 to be secured to a user's face.

In some embodiments, the strap component 103 may comprise an ear opening 105A and an ear opening 105B. When the example respiratory protective device 100 is worn by a user, the ear opening 105A and the ear opening 105B may allow the user's left ear and the right ear to pass through.

In some embodiments, the strap component 103 may be inserted through one or more strap bucket components (such as a strap bucket component 107A and a strap bucket component 107B as shown in FIG. 1). In some embodiments, the one or more strap bucket components may be in the form of one or more buckles that include, but not limited to, a tri-glide buckle), and may allow a user to adjust the length of the strap component 103 so that the example respiratory protective device 100 can be secured to a user's face.

In some embodiments, the mask component 101 is connected to the strap component 103. For example, a first end of the strap component 103 is connected to a first end of the mask component 101, and a second end of the strap component 103 is connected to a second of the mask component 101. In this example, the first end of the mask component 101 is opposite to the second end of the mask component 101. In the example shown in FIG. 1, an end of the strap component 103 may be secured to the mask component 101 via a fastener component 117 (such as, but not limited to, a snap button).

In some embodiments, the mask component 101 may be in the form of a mask or a respirator. For example, as shown in FIG. 1, the mask component 101 may comprise an outer shell component 109 and a face seal component 111.

In some embodiments, when the example respiratory protective device 100 is worn by a user, an outer surface of the outer shell component 109 is exposed to the outside environment. In some embodiments, the face seal component 111 is attached to and extends from a periphery and/or edge of the outer shell component 109 (or an inner shell component of the mask component as described herein).

In particular, the face seal component 111 may comprise soft material such as, but not limited to, silica gel. In some embodiments, when the example respiratory protective device 100 is worn by a user, the face seal component 111 is in contact with the user's face, and may seal the example respiratory protective device 100 to at least a portion of a user's face. As described above, the example respiratory protective device 100 includes strap component 103 that allows the example respiratory protective device 100 to be secured to the user's face. As such, the face seal component 111 can create at least partially enclosed (or entirely enclosed) space between at least a portion of the user's face (e.g. mouth, nostrils, etc.), details of which are described herein.

In some embodiments, the mask component 101 comprises one or more puck components that cover one or more inhalation filtration components of the example respiratory protective device 100. For example, as shown in FIG. 1, the example respiratory protective device 100 comprises a first puck component 113A that is disposed on a left side of the outer shell component 109 and a second puck component 113B that is disposed on a right side of the outer shell component 109. In such an example, the first puck component 113A covers a first inhalation filtration component that is disposed on the left side of the mask component 101, and the second puck component 113B covers a second inhalation filtration component that is disposed on the right side of the mask component 101, details of which are described herein.

In some embodiments, the mask component 101 comprises one or more key components (such as, but not limited to, the key component 115A, the key component 115B, and the key component 115C) that may allow a user to manually control the operations of the fan component of the mask component 101 and/or other devices (such as, but not limited to, earphones) that are in electronic communication with the example respiratory protective device 100.

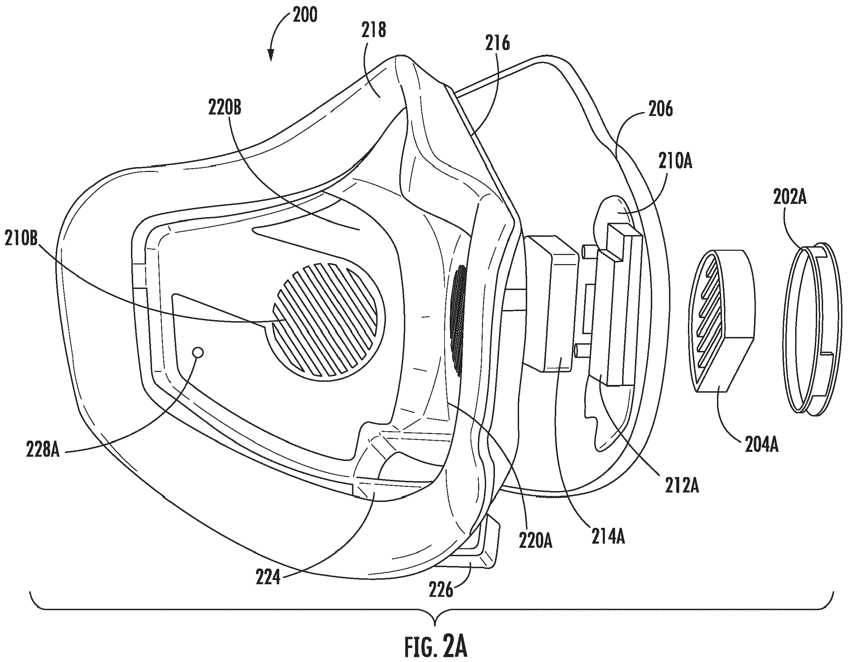

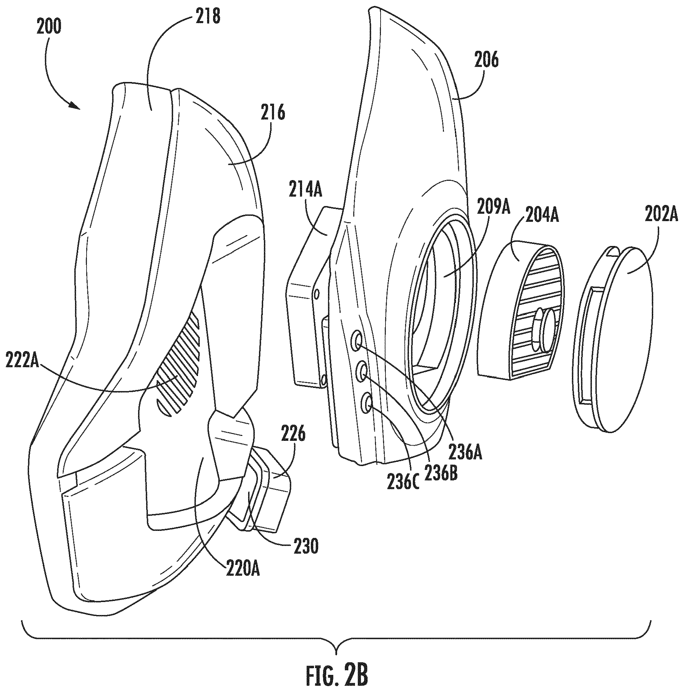

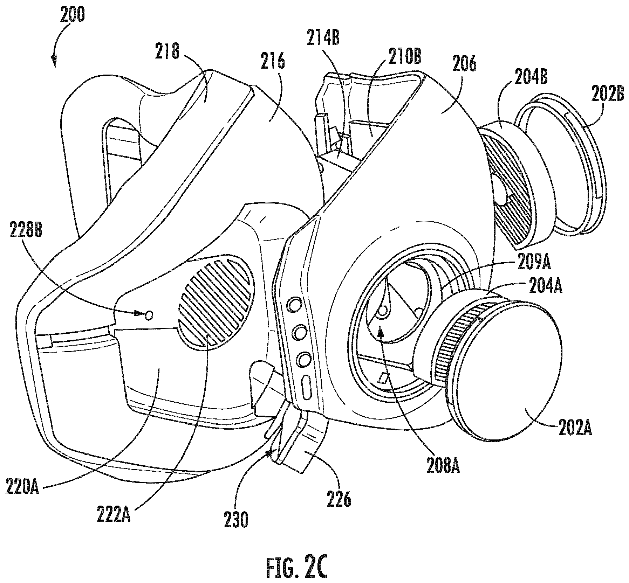

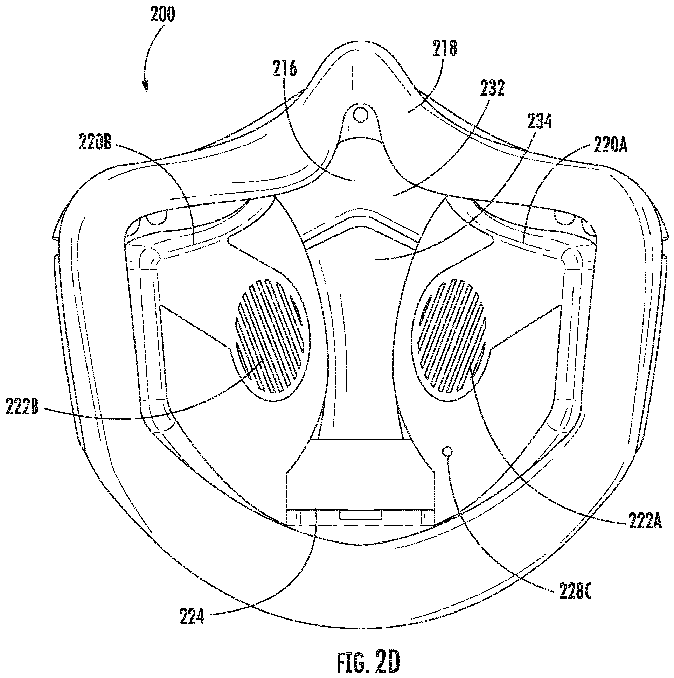

Referring now to FIG. 2A, FIG. 2B, FIG. 2C, and FIG. 2D, examples views of an example mask component 200 in accordance with some example embodiments described herein are illustrated. In particular, FIG. 2A to FIG. 2C illustrate example exploded views of the example mask component 200, and FIG. 2D illustrates an example back view of the example mask component 200.

As shown in FIG. 2A, the mask component 200 comprises an outer shell component 206 and an inner shell component 216.

In some embodiments, the inner shell component 216 may be in a shape that is based on the contour of the user's face. In particular, when the mask component 200 is worn by a user, at least a portion of the user's face (such as, but not limited to, mouth, nostrils) are housed within the inner shell component 216.

In some embodiments, the mask component 200 may comprise a face seal component 218. In some embodiments, the face seal component 218 is attached to and extends from a periphery and/or edge of the inner shell component 216. Similar to the face seal component 111 described above in connection with FIG. 1, the face seal component 216 may comprise soft material such as, but not limited to, silica gel.

In some embodiments, when the mask component 200 is worn by a user, the face seal component 218 and an inner surface of the inner shell component 216 create an enclosed space on at least a portion of the user's face (e.g. on the mouth, nostrils, etc.).

Similar to the inner shell component 216 described above, the shape of the outer shell component 206 may be based on a contour of the user's face. In some embodiments, when the mask component 200 is assembled, the inner surface of the outer shell component 206 is secured to an outer surface of the inner shell component 216. In some embodiments, the inner shell component 216 may comprise one or more indentation portions on the outer surface of inner shell component 216.

For example, referring now to FIG. 2B, the inner shell component 216 may comprise inner shell indentation portions such as, but not limited to, an inner shell indentation portion 220A that is on a left side of the mask component 200 and an inner shell indentation portion 220B that is on a right side of the mask component 200. In particular, each of the inner shell indentation portion 220A and inner shell indentation portion 220B may be sunken or depressed from the outer surface of inner shell component 216. As such, when the outer shell component 206 is secured to the inner shell component 216, the indentation portions may create space that houses electronic components.

Referring back to FIG. 2A, in some embodiments, one or more circuit board components (such as, but not limited to, a circuit board component 210A), one or more charging circuit components (such as, but not limited to, a charging circuit component 212A), and one or more fan components (such as, but not limited to, a fan component 214A) may be disposed in the space that is defined by the inner shell indentation portion 220A and the inner surface of the outer shell component 206. Similarly, one or more circuit board components (such as, but not limited to, a circuit board component 210B), one or more charging circuit components, and one or more fan components (such as, but not limited to, a fan component 214B) may be disposed in the space that is defined by the inner shell indentation portion 220B and the inner surface of the outer shell component 206. For example, the fan component 214A may be disposed on the right side of the example respiratory protective device 200 and the fan component 214B may be disposed on the left side of the example respiratory protective device 200.

In some embodiments, the circuit board component 210A comprises a circuit board (such as, but not limited to a printed circuit board (PCB)) where other electronic components can be secured to and be in electronic communications with one another. For example, a controller component, the charging circuit component 212A and the fan component 214A may be secured to the circuit board component 210A and be in electronic communication with one another.

In some embodiments, the charging circuit component 212A may comprise a charging circuit and/or a battery that supplies power to the controller component and/or the fan component 214A. For example, the charging circuit may include a Universal Serial Bus (USB) charger circuit that is connected to a rechargeable battery.

In some embodiments, the fan component 214A may comprise an electric fan. In some embodiments, the electric fan of the fan component 214A may operate at different rotation speeds. For example, the fan component 214A may be a stepped fan that provides different, predetermined settings for the rotation speeds. Additionally, or alternatively, the fan component 214A may be a stepless fan that enables continuous adjustment of the rotation speed.

In some embodiments, the electric fan of the fan component 214A may operate at different rotational directions. For example, the fan component 214A may operate in a forward direction or a reverse direction. As an example, when the fan component 214A operates in the forward rotational direction, the electric fan of the fan component 214A may rotate counter-clockwise (when viewing from a user wearing the mask component 200) and/or may operate as a blower that draws air from outside the mask component 200 to inside the mask component 200. As another example, when the fan component 214A operates in the reverse rotational direction, the electric fan of the fan component 214A may rotate clockwise (when viewing from a user wearing the mask component 200) and/or may operate as an exhaust/ventilation fan that draws air from inside the mask component 200 to outside the mask component 200.

In some embodiments, the start time, the stop time, the rotational directions (e.g. forward direction or reverse direction) and/or the rotation speed of the electric fan of the fan component 214A may be controlled and/or adjusted by the controller component.

For example, the controller component may transmit a forward rotation start signal to the fan component 214A that causes the fan component 214A to start forward rotation (e.g. start operating as a blower that draws air from outside the mask component 200 towards inside the mask component 200). In some embodiments, the forward rotation start signal may include a forward rotation speed value that indicates the speed for the fan component 214A. Additionally, or alternatively, the controller component may transmit a forward rotation stop signal to the fan component 214A that causes the fan component 214A to stop forward rotation.

Additionally, or alternatively, the controller component may transmit a reverse rotation start signal to the fan component 214A that causes the fan component 214A to start reverse rotation (e.g. start operating as an exhaust fan that draws air from inside the mask component 200 towards outside the mask component 200). In some embodiments, the reverse rotation start signal may include a reverse rotation speed value that indicates the speed for the fan component 214A. Additionally, or alternatively, the controller component may transmit a reverse rotation stop signal to the fan component 214A that causes the fan component 214A to stop reverse rotation.

Referring now to FIG. 2C, the mask component 200 may comprise one or more inhalation filtration components (such as, but not limited to, inhalation filtration component 204A and inhalation filtration component 204B) and one or more puck components (such as, but not limited to puck component 202A and puck component 202B).

In some embodiments, each of the one or more inhalation filtration components may comprise a filter media element that comprise filter material for filtering air. Examples of filter material include, but are not limited to, HEPA filters. In some embodiments, each of the one or more puck components may be positioned to cover one of the inhalation filtration components so as to prolong the lifespan of the mask component 200. For example, the puck component 202A may cover the inhalation filtration component 204A, and the puck component 202B may cover the inhalation filtration component 204B.

As shown in FIG. 2C, the outer shell component 206 of the example mask component 200 may comprise one or more outer shell indentation portions (such as the outer shell indentation portion 209A). In particular, each of the outer shell indentation portion 209A may be sunken or depressed from the outer surface of outer shell component 206. In some embodiments, one or more inhalation filtration components may be disposed in the outer shell indentation portions. For example, as shown in FIG. 2C, an inhalation filtration component 204A is disposed in the outer shell indentation portion 209A.

In some embodiments, each of the one or more outer shell indentation portions may comprise an air inlet opening, and each of the one or more inner shell indentation portions may comprise one or more air inlet slots. In some embodiments, when the mask component 200 is assembled and in use, the air inlet opening on the outer shell indentation portion is aligned with the one or more air inlet slots on the inner shell indentation portion.

For example, as shown in FIG. 2C, the air inlet opening 208A on the outer shell indentation portion 209A of the outer shell component 206 is aligned with the air inlet slots 222A on the inner shell indentation portion 220A of the inner shell component 216.

In this example, when the mask component 200 is worn by a user and the user inhales, air is drawn from the outside environment and travels through the inhalation filtration component 204A, through the air inlet opening 208A, through the air inlet slots 222A, and arrive at the user's mouth or nostrils. As described above and shown in FIG. 2A and FIG. 2B, the fan component 214A is disposed on the inner shell indentation portion 220A (where the air inlet slots 222A are located). In some embodiments, when the user inhales, the fan component 214A may operate in a forward direction that draws air from outside the mask component 200 towards inside the mask component 200, thereby facilitating the inhaling of the user.

Referring now to FIG. 2D, an example back view of the example mask component 200. In particular, FIG. 2D illustrates the view of the example mask component 200 when it is worn by a user and viewed by the user.

As shown in FIG. 2D, the example mask component 200 may comprise air inlet slots 222A that are located on the middle right side of the inner shell component 216, and air inlet slots 222B that are located on the middle left side of the inner shell component 216. For example, the inner surface 232 of the inner shell component 216 may comprise a nose portion 234, where a user may put his or her nose when the mask component 200 is worn. In this example, the air inlet slots 222A may be located to the right of the nose portion 234, and the air inlet slots 222B may be located to the left of the nose portion 234.

In some embodiments, the example mask component 200 may comprise an outlet opening 224 that is on a middle bottom portion of the inner shell component 216. In some embodiments, the outlet opening 224 may be located corresponding to the position of the user's mouth. For example, when a user exhales, the breath may be released through the outlet opening 224.

As shown in FIG. 2A to FIG. 2C, an exhalation filtration component 226 may be connected to the inner shell component 216 at the outlet opening 224. For example, the exhalation filtration component 226 may cover the outlet opening 224. In some embodiments, the exhalation filtration component 226 may comprise a filter media element that comprise filter material for filtering air. Examples of filter material include, but are not limited to, HEPA filters. As such, the breath that is exhaled by the user may be filtered before it is released from inside the mask component 200 to the outside environment.

In some embodiments, the exhalation filtration component 226 may comprise a humidity sensor component 230 that at least partially covers the outlet opening 224 of the inner shell component 216. The humidity sensor component 230 may comprise a humidity sensor that may, for example but not limited to, detect humidity levels within the enclosed space and/or in the breath exhaled by the user. Examples of the humidity sensor component 230 include, but are not limited to, capacitive humidity sensors, resistive humidity sensors, thermal humidity sensors, and/or the like. In some embodiments, the humidity sensor component 230 is in electronic communication with the controller component, and may transmit humidity indications to the controller component indicating the detected humidity levels (for example, relative humidity levels).

Further, in some embodiments, the exhalation filtration component 226 may comprise a temperature sensor component 240 that at least partially covers the outlet opening 224 of the inner shell component 216. The temperature sensor component 240 may comprise a temperature sensor that may, for example but not limited to, detect temperature levels within the enclosed space and/or in the breath exhaled by the user. In some embodiments, the temperature sensor component 240 is in electronic communication with the controller component, and may transmit temperature indications to the controller component indicating the detected temperature levels.

In some embodiments, the mask component 200 may comprise one or more pressure sensor components. As described above and as shown in FIG. 2B, when the mask component 200 is worn by a user, the face seal component 218 and an inner surface 232 of the inner shell component 216 create an enclosed space on at least a portion of the user's face (e.g. on the mouth, nostrils, etc.). In some embodiments, a pressure sensor component may comprise a pressure sensor that detects the air pressure within this enclosed space. Examples of the pressure sensor components include, but are not limited to, resistive air pressure transducer or strain gauge, capacitive air pressure transducer, inductive air pressure transducer, and/or the like.

For example, as shown in FIG. 2A, a pressure sensor component 228A may be disposed on an inner surface of the inner shell component 216. Additionally, or alternatively, as shown in FIG. 2C, a pressure sensor component 228B may be disposed on the inner shell indentation portion 220A of the inner shell component 216. Additionally, or alternatively, as shown in FIG. 2D, a pressure sensor component 228C may be disposed on the inner surface of the inner shell component 216. The pressure sensor component 228A, the pressure sensor component 228B, and/or the pressure sensor component 228C may detect the air pressure within the enclosed space defined by the face seal component 218 and the inner shell component 216 on at least a portion of the user's face.

In some embodiments, the one or more pressure sensor components are in electronic communication with the controller component, and may transmit air pressure indications to the controller component indicating the detected air pressure. For example, each of the air pressure indications may comprise an air pressure value that corresponds to the air pressure in the enclosed space as defined by the face seal component 218 and the inner shell component 216.

While the description above provides an example mask component, it is noted that the scope of the present disclosure is not limited to the description above. In some examples, an example mask component may comprise one or more additional and/or alternative elements. For example, an example mask component may comprise less than two or more than two fan components. Additionally, or alternatively, an example mask component may comprise less than two or more than two inhalation filtration components.

In some embodiments, mask component 200 may include one or more key components, such as, but not limited to, a key component 236A, a key component 236B, and a key component 236C. In some embodiments, the one or more key components may be disposed on an outer surface of the outer shell component 206. Each of the one or more key components may provide a button that allow a user to control and/or adjust the operations of various electronic components described herein (such as, but not limited to, fan components, earphones, and/or the like.)

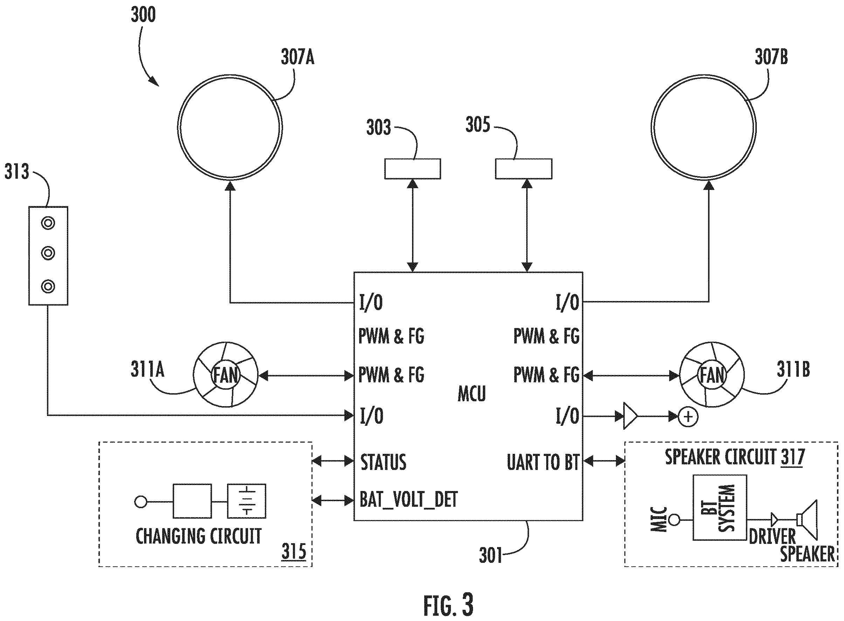

Referring now to FIG. 3, an example circuit diagram of an example respiratory protective device 300 in accordance with some example embodiments described herein is illustrated. In particular, FIG. 3 illustrates example electronic components of an example respiratory protective device in accordance with various example embodiments of the present disclosure.

As shown in FIG. 3, the example respiratory protective device 300 may comprise a controller component 301 that is in electronic communications with other components such as, but not limited to, the pressure sensor component 303, the temperature sensor component 304, the humidity sensor component 305, a light 307A and a light 307B that are disposed on one or more puck components, fan component 311A, fan component 311B, key components 313, and/or the speaker circuit 317.

In some embodiments, the controller component 301 may be embodied as means including one or more microprocessors with accompanying digital signal processor(s), one or more processor(s) without an accompanying digital signal processor, one or more coprocessors, one or more multicore processors, one or more controllers, processors, one or more computers, various other processing elements including integrated circuits such as, for example, an application specific integrated circuit (ASIC), programmable logic controller (PLC) or field programmable gate array (FPGA), or some combination thereof. Accordingly, although illustrated in FIG. 3 as a single processor, in an embodiment, the controller component 301 may include a plurality of processors and signal processing modules. The plurality of processors may be in operative communication with each other and may be collectively configured to perform one or more functionalities as described herein. In an example embodiment, the controller component 301 may be configured to execute instructions stored in a memory circuitry or otherwise accessible to the controller component.

Whether configured by hardware, firmware/software methods, or by a combination thereof, the controller component 301 may include an entity capable of performing operations according to embodiments of the present disclosure while configured accordingly. Thus, for example, when the controller component 301 is embodied as an ASIC, PLC, FPGA or the like, the controller component 301 may include specifically configured hardware for conducting one or more operations described herein. Alternatively, as another example, when the controller component 301 is embodied as an executor of instructions, such as may be stored in the memory circuitry, the instructions may specifically configure the controller component 301 to perform one or more algorithms and operations described herein.

Thus, the controller component 301 used herein may refer to a programmable microprocessor, microcomputer or multiple processor chip or chips that can be configured by software instructions (applications) to perform a variety of functions, including the functions of the various embodiments described above.

In some embodiments, the memory circuitry may include suitable logic, circuitry, and/or interfaces that are adapted to store a set of instructions that is executable by the controller component 301 to perform predetermined operations. Some of the commonly known memory implementations include, but are not limited to, a hard disk, random access memory, cache memory, read only memory (ROM), erasable programmable read-only memory (EPROM) & electrically erasable programmable read-only memory (EEPROM), flash memory, magnetic cassettes, magnetic tape, magnetic disk storage or other magnetic storage devices, a compact disc read only memory (CD-ROM), digital versatile disc read only memory (DVD-ROM), an optical disc, circuitry configured to store information, or some combination thereof. In an example embodiment, the memory circuitry may be integrated with the controller component 301 on a single chip, without departing from the scope of the disclosure.

In some embodiments, the pressure sensor component 303 may transmit air pressure indications to the controller component 301. As described above, each of the air pressure indications may comprise an air pressure value that corresponds to the air pressure in the enclosed space as defined by the face seal component 218 and the inner shell component 216.

In some embodiments, the temperature sensor component 304 may transmit temperature indications to the controller component 301. As described above, the temperature indications may indicate temperature levels within the example respiratory protective device. For example, the temperature indications may indicate temperature levels within the enclosed space defined by the face seal component and the inner shell component of the respiratory protective device on at least a portion of the user's face.

In some embodiments, the humidity sensor component 305 may transmit humidity indications to the controller component 301. As described above, the humidity indications may indicate relative humidity levels within the example respiratory protective device. For example, the humidity indications may indicate relative humidity levels within the enclosed space defined by the face seal component and the inner shell component of the respiratory protective device on at least a portion of the user's face.

In some embodiments, the controller component 301 may transmit control signals to the light 307A and/or the light 307B so as to adjust the color and/or intensity of the light emitted by the light 307A and/or the light 307B.

In some embodiments, the controller component 301 may transmit forward rotation start signals to the fan component 311A and/or the fan component 311B to cause the fan component 311A and/or the fan component 311B to start forward rotation. In some embodiments, the controller component 301 may transmit forward rotation stop signals to the fan component 311A and/or the fan component 311B to cause the fan component 311A and/or the fan component 311B to stop forward rotation.

In some embodiments, the controller component 301 may transmit reverse rotation start signals to the fan component 311A and/or the fan component 311B to cause the fan component 311A and/or the fan component 311B to start reverse rotation. In some embodiments, the controller component 301 may transmit reverse rotation stop signals to the fan component 311A and/or the fan component 311B to cause the fan component 311A and/or the fan component 311B to stop reverse rotation.

In some embodiments, the controller component 301 is in electronic communication with the key components 313. For example, when a user presses a button on the key components 313, the key components 313 may transmit a signal to the controller component 301.

In some embodiments, the controller component 301 is in electronic communication with the speaker circuit 317. For example, the controller component 301 may transmit control signals to an earphone in the speaker circuit 317 so as to adjust volume, noise canceling mode, and/or the like of the earphone.

In some embodiments, the charging circuit 315 supplies power to controller component 301 and one or more other electronic components shown in FIG. 3 (such as, but not limited to, the fan component 311A and the fan component 311B).

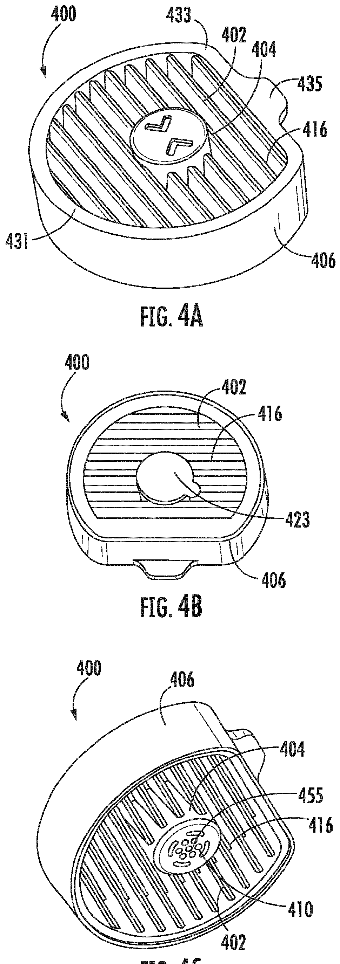

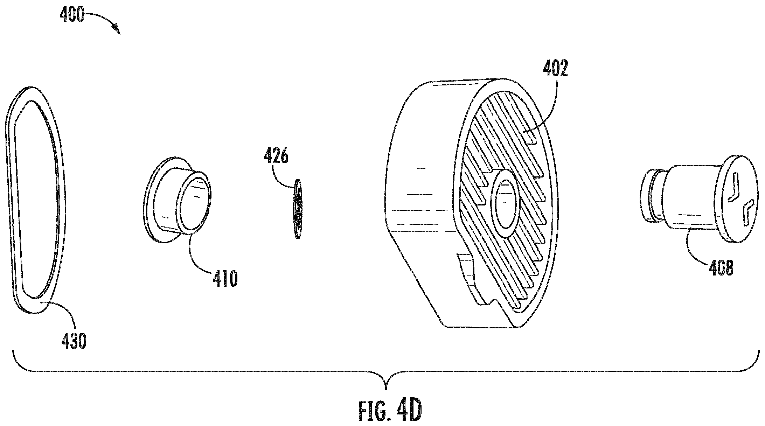

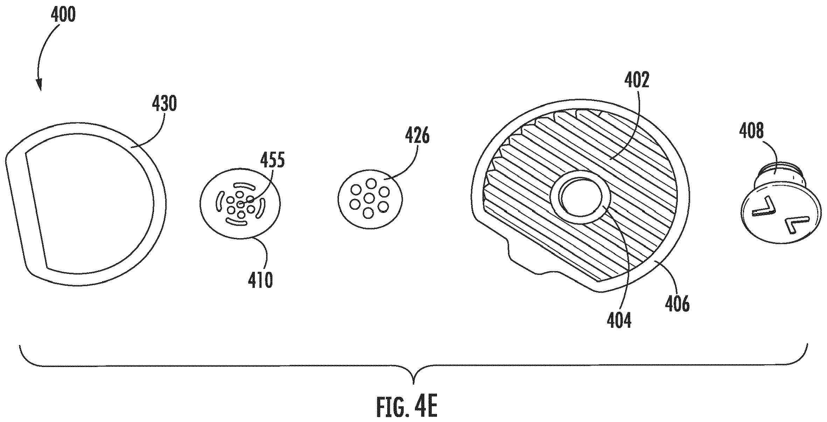

As described above, an example respiratory protective device may comprise one or more inhalation filtration components and/or one or more exhalation filtration components. Referring now to FIG. 4A, FIG. 4B, FIG. 4C, FIG. 4D, and FIG. 4E, an example filtration component 400 for a respiratory protective device is illustrated. In some embodiments, the example filtration component 400 is an example inhalation filtration component. In some embodiments, the example filtration component 400 is an example exhalation filtration component.

In particular, FIG. 4A illustrates an example perspective view from a front of the example filtration component 400. FIG. 4B illustrates another example perspective view from a back of the example filtration component 400 that includes a seal film element 423. FIG. 4C illustrates another example perspective view from the back of the example filtration component 400 without the seal film element.

In the example views shown in FIG. 4A, FIG. 4B, and FIG. 4C, the example filtration component 400 comprises a filter body 402. In some embodiments, the filter body 402 comprises a center wall element 404 and a periphery wall element 406. In some embodiments, the center wall element 404 is positioned within the periphery wall element 406. In some embodiments, the center wall element 404 is at the center of the periphery wall element 406. In some embodiments, the center wall element 404 is in a shape similar to an annular cylinder shape. In some embodiments, the center wall element 404 defines a center hole of the example filtration component 400. In some embodiments, the center wall element 404 comprises material(s) such as, but not limited to, thermoplastic elastomer (TPE) material. In some embodiments, the periphery wall element 406 is in a shape similar to an annular cylinder shape. In some embodiments, the periphery wall element 406 comprises material(s) such as, but not limited to, TPE material.

In some embodiments, the filter body 402 further comprises a filter media element 416. In some embodiments, the filter media element 416 is secured between the periphery wall element 406 and the center wall element 404. For example, the filter media element 416 is secured between an inner surface 437 of the periphery wall element 406 and the outer surface 439 of the center wall element 404. In some embodiments, the filter media element 416 may comprise filter material such as, but not limited to, HEPA filter materials.

In some embodiments, the filtration component 400 comprises a dispersing element container. In some embodiments, the dispersing element container is secured within the center wall element 404. For example, referring now to FIG. 4D and FIG. 4E, example components of an example dispersing element container are illustrated.

As shown in FIG. 4D and FIG. 4E, in some embodiments, the dispersing element container comprises a tube element 408 and a cover element 410.

In some embodiments, the tube element 408 comprises material(s) that provide chemical resistance characteristics. For example, the tube element 408 can provide chemical resistance to perfume or cream. In some embodiments, the tube element 408 comprises materials such as, but not limited to, polypropylene (PP) material. In some embodiments, the tube element 408 provides functions such as, but not limited to, containing the dispersing element such as scents elements while displaying a logo on the outer surface of the tube head of the tube element 408.

In some embodiments, the cover element 410 comprises material(s) that provide chemical resistance characteristics. For example, the cover element 410 comprises materials such as, but not limited to, PP material. In some embodiments, the cover element 410 provides functions such as scent release through openings on the cover element 410, details of which are described herein.

In some embodiments, the tube element 408 is fastened to the cover element 410. As described herein, the tube element 408 may be fixed to the cover element 410 through interference fit and/or glue adhesive such that they cannot be separated.

In some embodiments, the dispersing element container comprises a release film element 426.

In some embodiments, the release film element 426 comprises materials that are water and oil proof, and provide control release functions. For example, the release film element 426 comprises materials such as, but not limited to, microporous PTFE. In some embodiments, the release film element 426 is fixed to the inner surface of the cover element 410 so as to prevent leakage of the dispersing element. For example, the release film element 426 can be attached to the cover element 410 through glue adhesion and/or be structurally fixed to the cover element 410. In some embodiments, the release film element 426 may provide functions such as controlling scent releasing.

In some embodiments, the example filtration component 400 further comprises a near-field communication (NFC) element 430. In some embodiments, the NFC element 430 may be attached to a surface of the periphery wall element 406. In some embodiments, the NFC element 430 may comprise a memory storage that facilitates the storage of various data (e.g., determined remaining lifespan data) associated with the lifespan of a dispersing element of the filter component 400. In some embodiments, the NFC element 430 may store information such as, but not limited to, remaining lifespan data associated with a dispersing element (e.g., one or more determined remaining lifespan values associated with one or more instances), a serial number of the filtration component 400 so as to authenticate the filtration component 400 and/or the like. For example, in various embodiments, an exemplary respiratory protective device may record (e.g., store) at the NFC element 430 one or more remaining lifespan values determined with respect to the dispersing element of the filtration component 400 at one or more instances. In various embodiments, the NFC element 430 may be configured to receive an output signal defined at least in part by remaining lifespan data (e.g., one or more remaining lifespan values) from one or more communicative components (e.g., a controller) of an exemplary respiratory protective device and/or store the remaining lifespan data associated with the dispersing element on the NFC element 430. For example, a controller of an exemplary respiratory protective device may be configured to communicate with the NFC element 430 of the filter component 400 to retrieve and/or store various remaining lifespan data corresponding/associated with the filter component 400 (e.g., the dispersing element) of the respiratory protective device.

In various embodiments, an exemplary respiratory protective device may be configured to identify a lapsed lifespan condition associated with the dispersing element of the filtration component 400 based at least in part on a remaining lifespan value recorded at the NFC element 430. For example, upon determining that a remaining lifespan value associated with the dispersing element is defined by an at least substantially negligible value (e.g., zero), a controller (e.g., a processor) of an exemplary respiratory protective device may identify that the lifespan of the dispersing element has lapsed (e.g., that the dispersing element has reached its end of service life such that the dispersing element should be retired, replaced, and/or repaired), and therefore, that the dispersing element defines a lapsed lifespan condition. As described herein, in various embodiments, an exemplary respiratory protective device may be configured to, upon identifying the lapsed lifespan condition associated with the dispersing element, generate an alert signal (e.g., an audio signal, a visual signal, and/or the like, or any combination thereof) configured to provide an indication of the lapsed lifespan condition associated with the dispersing element.

In some embodiments, the dispersing element container comprises the tube element 408. In some embodiments, the tube element 408 is positioned at the distal end 412 of the center wall element 404. In some embodiments, the tube element 408 further comprises a tube body 418 and a tube head 420.

In some embodiments, the tube body 418 provides a housing for the dispersing element, details of which are described herein. In some embodiments, the tube body 418 is in a shape similar to an annular cylinder shape.

In some embodiments, the tube head 420 is in a shape similar to a cylinder shape. In some embodiments, the tube head 420 seals a distal end of the tube body 418. For example, the tube head 420 completely covers the opening defined at the distal end of the tube body 418. In some embodiments, the outer surface of the tube head 420 may display a logo, a label, or a branding.

In various embodiments, the dispersing element container comprises the cover element 410. In some embodiments, the cover element 410 comprises a cover body 424 and a cover head 422. In some embodiments, the cover body 424 is in a shape similar to an annular cylinder shape. In some embodiments, the cover head 422 is in a shape similar to a cylinder shape. In some embodiments, the cover head 422 at least particularly covers a proximal end of the cover body 424. For example, in some embodiments, the cover head 422 of the cover element 410 defines a plurality of openings 455 (as shown in FIG. 4C and FIG. 4E). In various embodiments, the plurality of openings defined by the cover head 422 may be configured to allow at least a portion of a dispersing element (e.g., scent molecules from the dispersing element) to pass therethrough.

In various embodiments, the dispersing element container comprises the release film element 426. In some embodiments, the release film element 426 is secured to the inner surface of the cover head 422 of the cover element 410. In some embodiments, the release film element 426 comprises microporous material. For example, the microporous material comprises materials(s) such as, but not limited to, polytetrafluoroethylene (PTFE). In various embodiments, an example release film element 426 may comprise a plurality of openings that allow scent molecules from a dispersing element to pass through.

As illustrated, in various embodiments, the dispersing element container may further comprise a seal film element 423. In some embodiments, the seal film element 423 is attached to an outer surface of the cover head 422 of the cover element 410. In some embodiments, the seal film element 423 covers the plurality of openings 455 of the cover element 410 and prevents scent molecules from the dispersing element to be released.

In some embodiments, the seal film element 423 is an aluminum laminated film that functions as a gas barrier for scent sealing. Additionally, or alternatively, the seal film element 423 may comprise materials such as, but not limited to, polyethylene terephthalate (PET) and/or PP. In some embodiments, the seal film element 423 may provide function as a gas barrier. In some embodiments, the seal film element 423 may be attached to the cover element through self-adhesion, and can be torn away before the example filtration component 400 is used. In various embodiments, the tube element 408 is fastened to the cover element 410.

In some embodiments, the filtration component 400 further comprises a dispersing element that is disposed within the dispersing element container. For example, the dispersing element is disposed within an enclosed space 428 that is defined by an inner surface of the tube body 418 of the tube element 408 and between the release film element 426 and the tube head 420 of the tube element 408. In some embodiments, the dispersing element disperses element to a user of the respiratory protective device after the seal film element is removed. For example, the dispersing element may disperse element to the user to sooth coughs, bring joy or relaxation, and so on along the breathing of the user.

In some embodiments, the dispersing element comprises fragrance material. For example, the fragrance material 604 may comprise fragrance oil, essential oils, and/or the like. Additionally, or alternatively, the fragrance material 604 may comprise specifically scented ingredients. For example, the fragrance material 604 may comprise materials such as, but not limited to, cypress, mint, lemon, jasmine, lavender, eucalyptus, lemon, lavender, sandalwood, grapefruit, tea, and/or the like. Additionally, or alternatively, the dispersing element may comprise medicated vapors that may soothe coughs and facilitate easier breathing. Additionally, or alternatively, the dispersing element may comprise chemicals such as cannabidiol.

In some examples, when the example filtration component 400 is assembled, the seal film element 423 is attached to an outer surface of the cover head 422 of the cover element 410 and covers the plurality of openings 455 of the cover element 410 to prevent scent molecules from the dispersing element to be released. When the example filtration component 400 is used by a user (for example, when the user puts on an example respiratory protective device that includes the example filtration component 400), the user may remove the seal film element 423. As the user inhales through the example filtration component 400, scent molecules from the dispersing element can be release through pores in the microporous material of the release film element 426 and/or the of openings of the release film element 426, as well as the openings 455 of the cover element 410, and arrive at the respiratory system of the user.

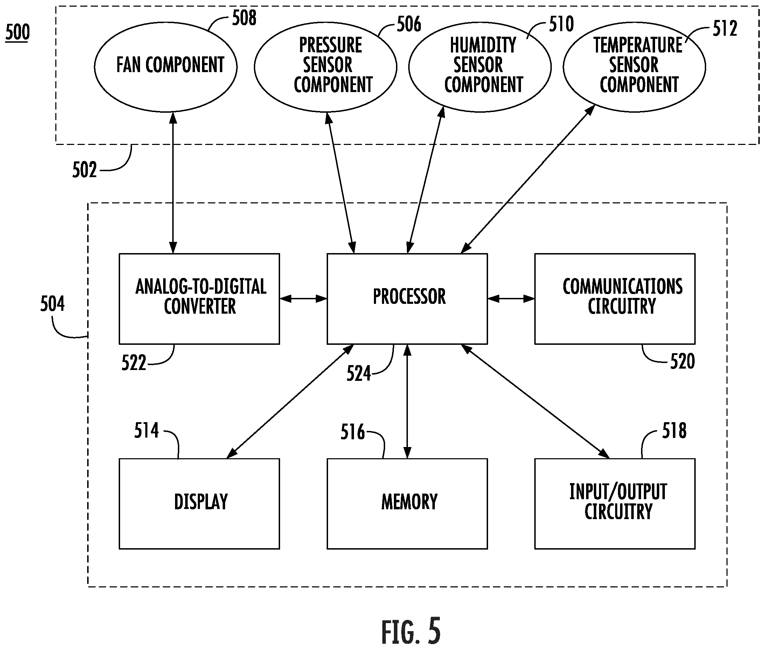

Referring now to FIG. 5, an example block diagram of an example respiratory protective device evaluation environment 500 in accordance with some embodiments of the present disclosure is illustrated.

In some embodiments, the example respiratory protective device evaluation environment 500 comprises an example respiratory protective device 502 and an example respiratory protective device evaluation system 504.

In some embodiments, the example respiratory protective device 502 is similar to the example respiratory protective devices described and illustrated above in connection with FIG. 1 to FIG. 4E. For example, the example respiratory protective device 502 may comprise components that include, but not limited to, a mask component similar to those described above in connection with FIG. 1 to FIG. 4E (such as, but not limited to, at least the mask component 101 illustrated above in connection with FIG. 1, and the mask component 200 illustrated above in connection with FIG. 2A to FIG. 2D). In some embodiments, the example respiratory protective device 502 may comprise various electronic components, such as, but not limited to, those example electronic components described and illustrated above in connection with FIG. 3. For the simplicity of illustration, FIG. 5 illustrates four of the electronic components of the example respiratory protective device 502: a pressure sensor component 506, a fan component 508, a humidity sensor component 510, and a temperature sensor component 512.

In some embodiments, the pressure sensor component 506 is similar to the pressure sensor components 228A, 228B, and/or 228C described above in connection with FIG. 2A to FIG. 2C, and/or the pressure sensor component 303 described above in connection with FIG. 3. For example, the pressure sensor component 506 comprises a pressure sensor that detects the air pressure within the enclosed space between the mask component of the example respiratory protective device 502 and the user's face when the example respiratory protective device 502 is worn by the user. Examples of the pressure sensor component 506 include, but are not limited to, barometric pressure sensors, resistive air pressure transducer or strain gauge, capacitive air pressure transducer, airflow velocity sensors, inductive air pressure transducer, spirometers, pneumotachometers, and/or the like. For example, the pressure sensor component 506 generates pressure detection signals, which indicates pressure values within the enclosed space as described above.

In some embodiments, the humidity sensor component 510 is similar to the humidity sensor component 230 described above in connection with FIG. 2C, and/or the humidity sensor component 305 described above in connection with FIG. 3. For example, the humidity sensor component 510 may comprise a humidity sensor component configured to capture one or more humidity value(s) at each of a plurality of instances.

In some embodiments, the temperature sensor component 512 is similar to the temperature sensor component 240 described above in connection with FIG. 2C, and/or the temperature sensor component 304 described above in connection with FIG. 3. For example, the temperature sensor component 512 may comprise a temperature sensor component configured to capture one or more temperature value(s) at each of a plurality of instances.

In some embodiments, the fan component 508 is similar to the fan components 214A and/or 214B described above in connection with FIG. 2A to FIG. 2C, and/or the fan components 311A and/or 311B described above in connection with FIG. 3. For example, the fan component 508 may comprise an electric fan that blows air into the respiratory protective device 502 when a user wearing the respiratory protective device inhales. In some embodiments, the fan component 508 is connected to a power source (such as, but not limited to, a rechargeable battery) that provides a current and/or a voltage to trigger the operation of the fan component 508. For example, when the current or the voltage is provided to the fan component 508, the fan component 508 starts to operate and blows air into the respiratory protective device. When the current or the voltage is not provided to the fan component 508, the fan component 508 stops operation and stops blowing air into the respiratory protective device.

In some embodiments, the fan component 508 is similar to the fan components 214A and/or 214B described above in connection with FIG. 2A to FIG. 2C, and/or the fan components 311A and/or 311B described above in connection with FIG. 3. For example, the fan component 508 may comprise an electric fan that blows air into the respiratory protective device 502 when a user wearing the respiratory protective device inhales. In some embodiments, the fan component 508 is connected to a power source (such as, but not limited to, a rechargeable battery) that provides a current and/or a voltage to trigger the operation of the fan component 508. For example, when the current or the voltage is provided to the fan component 508, the fan component 508 starts to operate and blows air into the respiratory protective device. When the current or the voltage is not provided to the fan component 508, the fan component 508 stops operation and stops blowing air into the respiratory protective device.

In the example respiratory protective device evaluation environment 500, the example respiratory protective device 502 may be worn by a testing mannequin. For example, the testing mannequin may comprise an artificial head model that is shaped based on contours and features of a typical human head, and the example respiratory protective device 502 may be secured to the artificial head model of the testing mannequin. In some embodiments, the example respiratory protective device 502 covers at least the mouth and/or the nose of the artificial head model. In some embodiments, the mouth and/or the nose of the artificial head model is connected to an artificial lung that mimics breathing patterns of human beings. For example, the artificial lung is connected to a motor that mimics inhaling and exhaling of human beings.

In some embodiments, the example respiratory protective device 502 is connected to the respiratory protective device evaluation system 504 through wired and/or wireless means for data reading, writing, and transfer. In the example shown in FIG. 5, the respiratory protective device evaluation system 504 comprises a processor 524, an analog-to-digital converter 522, a display 514, a memory 516, an input/output circuitry 518, and a communications circuitry 520.

In the example shown in FIG. 5, the processor 524 is connected to the pressure sensor component 506 of the respiratory protective device 502. As described above, the pressure sensor component 506 comprises a pressure sensor that detects the air pressure within the enclosed space between the mask component of the example respiratory protective device 502 and the user's face when the example respiratory protective device 502 is worn by the user. In some embodiments, the pressure sensor component 506 generates pressure detection signals that indicate pressures within the enclosed space described above. In some embodiments, the pressure sensor component 506 is connected to the processor 524 through wired and/or wireless means and provides pressure detection signals to the processor 524. In some embodiments, the processor 524 generates pressure measurement parameters based on the pressure detection signals received from the processor 524.

In some embodiments, the processor 524 is connected to the humidity sensor component 510 of the respiratory protective device 502. As described above, the humidity sensor component 510 comprises a humidity sensor that detects the humidity (e.g., relative humidity) within the enclosed space between the mask component of the example respiratory protective device 502 and the user's face when the example respiratory protective device 502 is worn by the user. In some embodiments, the humidity sensor component 510 generates humidity detection signals that indicate one or more humidity values as captured within the enclosed space described above. In some embodiments, the humidity sensor component 510 is connected to the processor 524 through wired and/or wireless means and provides humidity detection signals to the processor 524. In some embodiments, the processor 524 generates humidity measurement parameters based on the humidity detection signals received from the processor 524.

In some embodiments, the processor 524 is connected to the temperature sensor component 512 of the respiratory protective device 502. As described above, the temperature sensor component 512 comprises a temperature sensor that detects the air temperature within the enclosed space between the mask component of the example respiratory protective device 502 and the user's face when the example respiratory protective device 502 is worn by the user. In some embodiments, the temperature sensor component 512 generates temperature detection signals that indicate one or more temperature values as captured within the enclosed space described above. In some embodiments, the temperature sensor component 512 is connected to the processor 524 through wired and/or wireless means and provides temperature detection signals to the processor 524. In some embodiments, the processor 524 generates temperature measurement parameters based on the temperature detection signals received from the processor 524.

In some embodiments, the analog-to-digital converter 522 is connected to the fan component 508 of the respiratory protective device 502. As described above, when a current and/or a voltage is provided to the fan component 508, the fan component 508 starts to operate and blows air into the respiratory protective device 502. In some embodiments, the analog-to-digital converter 522 receives an electrical signal that corresponds to the current and/or the voltage that is provided to the fan component 508. For example, the higher the electrical signal that is received by the analog-to-digital converter 522, the higher the current and/or voltage that is provided to the fan component 508, and the faster the fan component 508 operates.

In some embodiments, the analog-to-digital converter 522 converts the electrical signal received from the fan component 508 to a digital signal. For example, the analog-to-digital converter 522 converts the electrical signal into a digital signal that indicates the value of the current and/or the voltage that is provided to the fan component 508. Examples of the analog-to-digital converter 522 include, but are not limited to, direct-conversion analog-to-digital converter (ADC), successive-approximation ADCs, ramp-compare ADCs, and/or the like.

In some embodiments, the analog-to-digital converter 522 is connected to the processor 524 of the respiratory protective device evaluation system 504 through wired and/or wireless means and provides digital signals to the processor 524 of the respiratory protective device evaluation system 504. In some embodiments, based on the digital signals received from the analog-to-digital converter 522, the processor 524 of the respiratory protective device evaluation system 504 generates fan control parameters that indicate the current and/or the voltage that is provided to the fan component 508.

The respiratory protective device evaluation system 504 may be configured to execute the operations described herein. Although components of the respiratory protective device evaluation system 504 are described with respect to functional limitations, it should be understood that the particular implementations necessarily include the use of particular hardware. It should also be understood that certain of the components described herein may include similar or common hardware. For example, two sets of circuitries may both leverage use of the same processor, network interface, storage medium, or the like to perform their associated functions, such that duplicate hardware is not required for each set of circuitries. The use of the term "circuitry" as used herein with respect to components of the apparatus should therefore be understood to include particular hardware configured to perform the functions associated with the particular circuitry as described herein.

As described above, the term "circuitry" should be understood broadly to include hardware and, in some embodiments, software for configuring the hardware. For example, in some embodiments, "circuitry" may include processing circuitry, storage media, network interfaces, input/output devices, and the like. In some embodiments, other elements of the respiratory protective device evaluation system 504 may provide or supplement the functionality of particular circuitry. For example, the processor 524 may provide processing functionality, the memory 516 may provide storage functionality, the communications circuitry 520 may provide network interface functionality, and the like.

In some embodiments, the processor 524 (and/or co-processor or any other processing circuitry assisting or otherwise associated with the processor) may be in communication with the memory 516 via a bus for passing information among components of the apparatus. The memory 516 may be non-transitory and may include, for example, one or more volatile and/or non-volatile memories. In other words, for example, the memory 516 may be an electronic storage device (e.g., a computer readable storage medium). The memory 516 may be configured to store information, data, content, applications, instructions, or the like, for enabling the respiratory protective device evaluation system 504 to carry out various functions in accordance with example embodiments of the present disclosure.

The processor 524 may be embodied in a number of different ways and may, for example, include one or more processing devices configured to perform independently. Additionally, or alternatively, the processor 524 may include one or more processors configured in tandem via a bus to enable independent execution of instructions, pipelining, and/or multithreading. The use of the term "processing circuitry" may be understood to include a single core processor, a multi-core processor, multiple processors internal to the apparatus, and/or remote or "cloud" processors.

In an example embodiment, the processor 524 may be configured to execute instructions stored in the memory 516 or otherwise accessible to the processor. Alternatively, or additionally, the processor 524 may be configured to execute hard-coded functionality. As such, whether configured by hardware or software methods, or by a combination thereof, the processor may represent an entity (e.g., physically embodied in circuitry) capable of performing operations according to an embodiment of the present disclosure while configured accordingly. Alternatively, as another example, when the processor 524 is embodied as an executor of software instructions, the instructions may specifically configure the processor to perform the algorithms and/or operations described herein when the instructions are executed.

In some embodiments, the respiratory protective device evaluation system 504 may include the input/output circuitry 518 that may, in turn, be in communication with the processor 524 to provide output to the user and, in some embodiments, to receive an indication of a user input. The input/output circuitry 518 may comprise an interface, a mobile application, a kiosk, or the like. In some embodiments, the input/output circuitry 518 may also include a keyboard, a mouse, a joystick, a touch screen, touch areas, soft keys, a microphone, a speaker, or other input/output mechanisms. The processor and/or user interface circuitry comprising the processor may be configured to control one or more functions of one or more user interface elements through computer program instructions (e.g., software and/or firmware) stored on a memory accessible to the processor (e.g., the memory 516, and/or the like).

In some embodiments, the respiratory protective device evaluation system 504 may include the display 514 that may, in turn, be in communication with the processor 524 to display renderings of user interfaces. In various examples of the present disclosure, the display 514 may include a liquid crystal display (LCD), a light-emitting diode (LED) display, a plasma (PDP) display, a quantum dot (QLED) display, and/or the like.

The communications circuitry 520 may be any means such as a device or circuitry embodied in either hardware or a combination of hardware and software that is configured to receive and/or transmit data from/to a network and/or any other device, circuitry, or module in communication with the respiratory protective device evaluation system 504. In this regard, the communications circuitry 520 may include, for example, a network interface for enabling communications with a wired or wireless communication network. For example, the communications circuitry 520 may include one or more network interface cards, antennae, buses, switches, routers, modems, and supporting hardware and/or software, or any other device suitable for enabling communications via a network. Additionally, or alternatively, the communication interface may include the circuitry for interacting with the antenna(s) to cause transmission of signals via the antenna(s) or to handle receipt of signals received via the antenna(s).

It is also noted that all or some of the information discussed herein can be based on data that is received, generated and/or maintained by one or more components of respiratory protective device evaluation system 504. In some embodiments, one or more external systems (such as a remote cloud computing and/or data storage system) may also be leveraged to provide at least some of the functionality discussed herein.

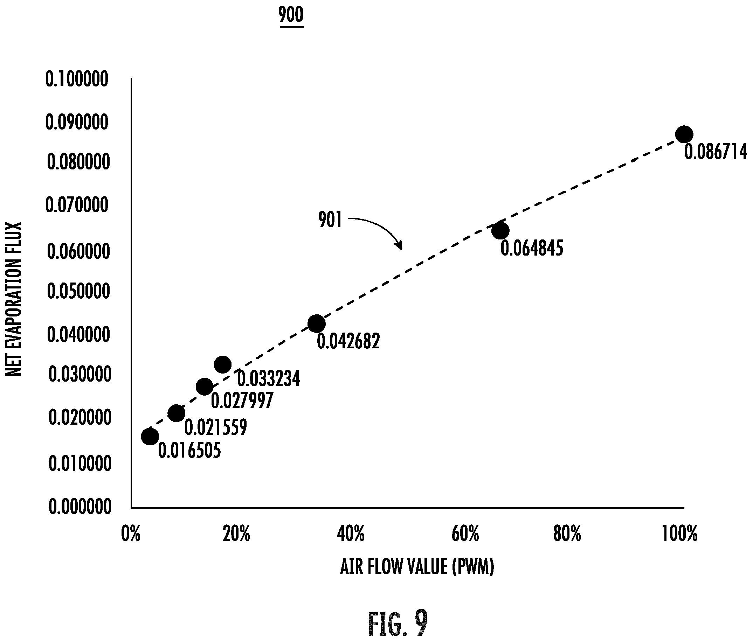

In various embodiments, a protective device evaluation environment, such as, for example, the exemplary protective device evaluation environment 500 shown in FIG. 5, may be used to empirically determine various operational data (e.g., temperature values, humidity values, air flow values, and/or the like) and/or one or more approximation algorithms that may be used to determine a remaining lifespan value of a filter component (e.g., a net volatility associated with a dispersing element of the filter component). As a non-limiting illustrative example, the exemplary protective device evaluation environment 500 shown in FIG. 5 may be used to empirically determine the operational data and approximation algorithm described herein in reference to FIG. 9.

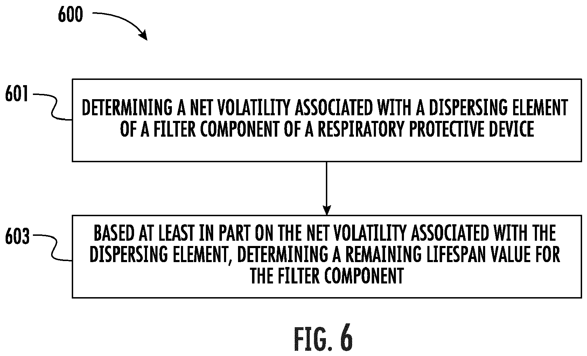

Referring now to FIG. 6, an example method 600 is illustrated. In particular, the example method 600 illustrates example steps/operations of determining a remaining lifespan value for a filter component having a dispersing element configured for use in a respiratory protective device in accordance with some example embodiments described herein. In various embodiments, the remaining lifespan value of a dispersing element at a particular instance may correspond at least in part to the net volatility of the dispersing element at that particular instance. Accordingly, as described herein, the net volatility associated with the dispersing element of a filer component may be determined (e.g., by an exemplary respiratory protective device) at one or more instances (e.g., over a period of time) in order to facilitate the determination of the remaining lifespan value of the filter component (e.g., the dispersing element). In an exemplary embodiment wherein a filter component of a respiratory protective device includes a dispersing element, the dispersing element may be configured such that the volatility of the dispersing element varies based on one or more operational characteristics associated with the respiratory protective device, such as, for example, a temperature value (e.g., captured by a temperature sensor component of the respiratory protective device), a humidity value (e.g., captured by a humidity sensor component of the respiratory protective device), and an air flow value (e.g., determined by a controller based on a fan component of the respiratory protective device). For example, in various embodiments, a dispersing element may be configured such that the volatility of the dispersing element may increase with an increase in temperature. Similarly, the dispersing element may be configured such that the volatility of the dispersing element may increase with a decrease in humidity. Further still, the dispersing element may be configured such that the volatility of the dispersing element may increase with an increase in air flow speed defined by a fan component of the respiratory protective device.

In FIG. 6, the example method 600 starts at step/operation 601. In some embodiments, at step/operation 601, the example method 600 comprises determining a net volatility associated with a dispersing element of a filter component of a respiratory protective device. As described herein, various embodiments described herein account for the variability of the volatility associated with the dispersing element by utilizing one or more approximation algorithms defined according to the one or more operational characteristics associated with the respiratory protective device to determine the net volatility of the dispersing element.

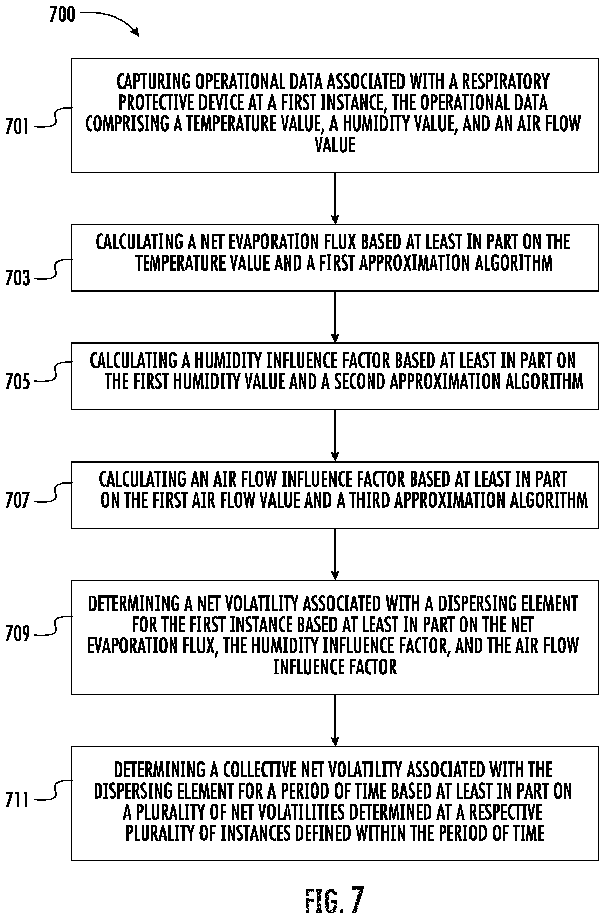

As an illustrative example, FIG. 7 illustrates an exemplary method comprising steps/operations of determining a net volatility associated with a dispersing element in accordance with some example embodiments described herein. In FIG. 7, the example method 700 starts at step/operation 701. In some embodiments, at step/operation 701, the example method 700 comprises capturing operational data associated with a respiratory protective device at a first instance, the operational data comprising a temperature value, a humidity value, and an air flow value. For example, in various embodiments, operational data including temperature value(s), humidity value(s), and air flow value(s) may be captured and/or determined by an exemplary respiratory protective device, such as, but not limited to, the exemplary respiratory protective device 300 and the exemplary respiratory protective device 502 (e.g., including the respiratory protective device evaluation system 504) described in connection with FIG. 3 and FIG. 5, respectively. In various embodiments, each temperature value, humidity value, and/or air flow value captured and/or determined for a particular instance may be associated with at least one timestamp value corresponding to the particular instance at which the data defining the temperature value, humidity value, and/or air flow value was captured.

In various embodiments, at step/operation 703, the example method 700 comprises calculating a net evaporation flux based at least in part on the temperature value and a first approximation algorithm. In various embodiments, the net evaporation flux associated with a dispersing element at a first instance may correspond at least in part to one or more temperature values measured before, after, and/or at the first instance (e.g., by a temperature sensor component of an exemplary respiratory protective device). For example, in various embodiments, the net evaporation flux ($j^{LV}$) at an instance (e.g., the first instance) may be defined at least in part by the following relationship, wherein $T^{1/2}$ is defined by a succeeding temperature value captured at an instance after to the first instance and $T^{-1/2}$ is defined by a preceding temperature value captured at an instance prior to the first instance, the succeeding temperature value and the preceding temperature value being captured at respective instances that follow and precede the first instance, respectively, by an at least substantially equal amount of time:

$$j^{LV} \propto a * T^{\frac{1}{2}} + T^{-\frac{1}{2}} * b + c$$

In various embodiments, a determination of the net volatility associated with a dispersing element may include various calculations and/or determinations made using one or more approximation algorithms. For example, each of the one or more approximation algorithms may correspond to a respective one of the operational characteristics defined by the operation data captured by a respiratory protective device (e.g., temperature values, humidity values, and/or air flow values). As illustrated in FIG. 7, the one or more approximation algorithms used in determining the net volatility associated with the dispersing element may include a first approximation algorithm that defines an estimated relationship between a measured temperature value (e.g., within an operable temperature range) and a net evaporation flux. For example, in various embodiments, the first approximation algorithm may be derived at least in part via one or more empirical means. For example, the first approximation algorithm may be determined by representing the humidity value and air flow value as constants and calculating the net evaporation flux at each of a plurality of incremental temperature values within an operable temperature range defined by an exemplary respiratory protective device. For example, in various embodiments, the operable temperature range of an exemplary respiratory protective device may be between 30 °C and 35 °C. As a non-limiting example, in such an exemplary experimental environment, the humidity value may be represented by a constant value of 85% relative humidity (RH) and the air flow value may be represented by a constant value of 50% pulse width modulation (PWM), with the incremental temperature values being defined by an interval of 1 °C. As described herein, a series of consecutive experimental tests (e.g., runs, trials, and/or the like) may be executed, each resulting the collection of a plurality of net evaporation flux values at the respective plurality of incremental temperature values.

In various embodiments, the empirical data collected via the one or more experimental tests may be used to determine (e.g., derive) the first approximation algorithm, as described above. Further, in various embodiments, the net evaporation flux at the first instance may be calculated (e.g., estimated) by using the temperature value captured at the first instance as an input to the first approximation algorithm to estimate the corresponding net evaporation flux at that temperature.

In various embodiments, at step/operation 705, the example method 700 comprises calculating a humidity influence factor based at least in part on the humidity value and a second approximation algorithm. In various embodiments, the humidity influence factor associated with the dispersing element at the first instance may correspond at least in part to the humidity value captured (e.g., by a humidity sensor component of an exemplary respiratory protective device) at the first instance. For example, in various embodiments, the humidity influence factor at an instance (e.g., the first instance) may be defined at least in part by the following relationship, wherein H is defined by a measured humidity value:

$$f^H \propto a' - b' * H$$

In various embodiments, the one or more approximation algorithms used in determining the net volatility associated with the dispersing element may include a second approximation algorithm that defines an estimated relationship between a measured humidity value (e.g., within an operable humidity range) and a net evaporation flux. As described above with respect to the first approximation algorithm, in various embodiments, the second approximation algorithm may be derived at least in part via one or more empirical means. For example, the second approximation algorithm may be determined by representing the temperature value and air flow value as constants and calculating the net evaporation flux at each of a plurality of incremental humidity values within an operable humidity range defined by an exemplary respiratory protective device. For example, in various embodiments, the operable humidity range of an exemplary respiratory protective device may be between 75% RH and 95% RH. As a non-limiting example, in such an exemplary experimental environment, the temperature value may be represented by a constant value of 32 °C and the air flow value may be represented by a constant value of 50% pulse width modulation (PWM), with the incremental humidity values being defined at interval of 3% RH. As described herein, a series of consecutive experimental tests (e.g., runs, trials, and/or the like) may be executed, each resulting the collection of a plurality of net evaporation flux values at the respective plurality of incremental humidity values. In various embodiments, the empirical data collected via the one or more experimental tests may be used to determine (e.g., derive) the second approximation algorithm, as described above.

Further, in various embodiments, the humidity value captured at the first instance may be used as an input to the second approximation algorithm to estimate the corresponding net evaporation flux at that humidity value. In various embodiments, a humidity influence factor used to determine the net volatility associated with the dispersing element at the first instance may be calculated using the net evaporation flux estimated based on the second approximation algorithm and the humidity value captured at the first instance. For example, the humidity influence factor may be defined by the following relationship:

$$f^H = \frac{Net\ Evaporation\ Flux\ at\ H = Measured\ Humidity\ Value}{Net\ Evaporation\ Flux\ at\ H = 85\%\ Relative\ Humidity}$$

As shown above, the humidity influence factor may be defined by a ratio of the net evaporation flux at the measured humidity value captured at the first instance to the net evaporation flux to a baseline net evaporation flux estimated (e.g., via the second approximation algorithm) at a baseline humidity value, such as, for example a humidity value of 85% RH. For example, a baseline humidity value of 85% RH may be used as an input to the second approximation algorithm to estimate the corresponding net evaporation flux at that humidity value.

In various embodiments, at step/operation 707, the example method 700 comprises calculating an air flow influence factor based at least in part on the air flow value and a third polynomial regression. In various embodiments, the air flow influence factor associated with the dispersing element at the first instance may correspond at least in part to the air flow value captured and/or determined (e.g., by a controller of an exemplary respiratory protective device) at the first instance.

In various embodiments, the one or more approximation algorithms used in determining the net volatility associated with the dispersing element may include a third approximation algorithm that defines an estimated relationship between a measured air flow value (e.g., air flow speed) and a net evaporation flux.

As described above with respect to the first and second approximation algorithms, in various embodiments, the third approximation algorithm may be derived at least in part via one or more empirical means. For example, the third approximation algorithm may be determined by representing the temperature value and humidity value as constants and calculating the net evaporation flux at each of a plurality of incremental air flow values defined by an exemplary respiratory protective device. As a non-limiting example provided for illustrative purposes, in an exemplary experimental environment, the temperature value may be set at a constant of 32 °C and the humidity value may be set at a constant of 85% relative humidity, with the incremental temperature values being defined by an interval of 5% PWM. As described herein, a series of consecutive experimental tests (e.g., runs, trials, and/or the like) may be executed, each resulting the collection of a plurality of net evaporation flux values at the respective plurality of incremental air flow values. In various embodiments, the empirical data collected via the one or more experimental tests may be used to determine (e.g., derive) the third approximation algorithm, as described herein.

As a non-limiting example provided for illustrative purposes, Table 1, below, includes exemplary net evaporation flux data for a plurality of different air flow values based on an exemplary experiment configuration wherein the temperature value is set at a constant of 32 °C and the humidity value is set at a constant of 85% relative humidity:

| Air Flow Value (PWM) | Test 1 | Test 2 | Test 3 | Test 4 | Test 5 | Average | Deviation |
|---|---|---|---|---|---|---|---|
| 3% | 0.017191 | 0.016292 | 0.016106 | 0.016788 | 0.017014 | 0.016678 | 0.000465 |
| 8% | 0.020102 | 0.021084 | 0.021972 | 0.021741 | 0.021260 | 0.021232 | 0.000726 |
| 13% | 0.030137 | 0.029192 | 0.027967 | 0.029591 | 0.030149 | 0.029407 | 0.000900 |
| 17% | 0.033509 | 0.033714 | 0.034133 | 0.031602 | 0.032366 | 0.033065 | 0.001047 |
| 33% | 0.042407 | 0.041188 | 0.044207 | 0.041818 | 0.044050 | 0.042734 | 0.001345 |
| 67% | 0.064472 | 0.067493 | 0.065021 | 0.067137 | 0.065380 | 0.065901 | 0.001337 |
| 100% | 0.084057 | 0.092232 | 0.090824 | 0.084114 | 0.091998 | 0.088654 | 0.0004196 |

As shown above, various statistical data associated with the plurality of tests, such as, for example, the average net evaporation flux and deviation over the five tests for each of the measured air flow points may be determined. FIG. 9 illustrates a graphical representation of the net evaporation flux data captured during the above-referenced experimental test, as provided above in Table 1. In particular, the exemplary graph 900 illustrated in FIG. 9 shows the example net evaporation flux data from Table 1, above, at each of the incremental air flow values used during the above-referenced experimental test, as well as regression curve 901 defining an approximation algorithm (e.g., the third approximation algorithm) corresponding to various air flow values in association with an exemplary dispersing element.

As described herein, in various embodiments, the air flow value associated with the first instance may be used as an input to the third approximation algorithm to estimate the corresponding net evaporation flux at that air flow value. In various embodiments, an air flow influence factor used to determine the net volatility associated with the dispersing element at the first instance may be calculated using the net evaporation flux estimated based on the third approximation algorithm and the air flow value captured at the first instance. Further, the air flow influence factor may be defined by the following relationship, wherein A defines an air flow value:

$$f^A = \frac{Net\ Evaporation\ Flux\ at\ A=Measured\ Air\ Flow\ Value}{Net\ Evaporation\ Flux\ at\ A=50\%\ PWM}$$

As shown above, the air flow influence factor may be defined by a ratio of the net evaporation flux at the measured air flow value captured at the first instance to the net evaporation flux to a baseline net evaporation flux that is estimated (e.g., via the third approximation algorithm) at a baseline air flow value, such as, for example an air flow value of 50% PWM. For example, a baseline air flow value of 50% PWM may be used as an input to the third approximation algorithm to estimate the corresponding net evaporation flux at that air flow value.

In various embodiments, at step/operation 709, the example method 700 comprises determining a net volatility associated with a dispersing element for the first instance based at least in part on the net evaporation flux, the humidity influence factor, and the air flow influence factor. In various embodiments, the net volatility associated with a dispersing element at a first instance may be defined by a relationship between a net evaporation flux ($j^{LV}$) (e.g., defined at a measured temperature value), a humidity influence factor ($f^H$) (e.g., defined at a measured humidity value), and an air flow influence factor ($f^A$) (e.g., defined at a measured air flow value). For example, in various embodiments, the net volatility ($j$) at the first instance may be defined by the following relationship:

$$j = j^{LV} * f^H * f^A$$

The calculated net evaporation flux ($j^{LV}$), as described above in reference to step/operation 703, the calculated humidity influence factor ($f^H$), as described above in reference to step/operation 705, and the calculated air flow influence factor ($f^A$), as described above in reference to step/operation 707, may each be used as inputs in the above equation to determine the net volatility associated with the dispersing element for the first instance.

In various embodiments, at step/operation 711, the example method 700 comprises determining a collective net volatility associated with the dispersing element for a period of time based at least in part on a plurality of net volatilities determined at a respective plurality of instances defined within the period of time. For example, in various embodiments, the collective net volatility ($J$) associated with the dispersing element for the period of time may be defined by a sum of each of the plurality of net volatilities determined for each of the instances defined within the period of time, as represented by the below relationship:

$$J = \sum j_i = \sum j_i^{LV} * f_i^H * f_i^A$$

In various embodiments, the above equation for the collective net volatility associated with a dispersing element may represent an abstracted estimation of the collective net volatility associated with the dispersing element in a constant environment defined by operational characteristics associated with a respiratory protective device, such as, for example, temperature values, humidity values, and air flow values, that remain unchanged throughout the period of time.

Referring back to FIG. 6, in various embodiments, the example method 600 may continue at step/operation 603, wherein the example method 600 comprises, based at least in part on the net volatility associated with the dispersing element, determining a remaining lifespan value for the filter component. In various embodiments wherein the filter component of an exemplary respiratory protective device comprises a dispersing element, as described herein, a remaining lifespan of the filter component may be defined at least in part by a remaining lifespan of the dispersing element. As described herein in reference to FIG. 7, the remaining lifespan of a dispersing element at a particular instance may be determined at least in part by determining the net volatility associated with (e.g., of and/or defined by) the dispersing element at that instance. In various embodiments, the net volatility associated with the dispersing element, as captured at a first instance, may be used as an input into one or more equations, correlations, and/or other defined relationships to determine the remaining lifespan of the filter component.

As an illustrative example, in various embodiments, a determined net volatility may be converted to time value based at least in part on a comparison of one or more of operating characteristics associated with the respiratory protective device at a particular instance with corresponding baseline operational characteristic values (e.g., stored baseline data) defined by predetermined baseline conditions assumed at an initial instance (e.g., wherein time (t) = 0). For example, an initial lifespan value may be defined by a predetermined lifespan value stored at an NFC element of an exemplary respiratory protective device, such as, for example, a stored initial lifespan value of 5400 minutes, 1 month, and/or the like (e.g., representing a usage of three hours per day for 30 days per month) and assumed at baseline operational characteristics, such as, for example, a temperature value of 32 °C, a humidity value of 85% RH, and an air flow value of 50% PWM. In various embodiments, upon defining an initial lifespan value, a time value corresponding to the net volatility determined at a particular instance or time period (e.g., as described above in reference to the exemplary method 700 shown in FIG. 7) may be determined by converting the net volatility via a comparison of one or more of the operating characteristics captured at the particular instance or time period with corresponding baseline operational characteristic values. Further, the remaining lifespan value for the particular instance or time period may be determined by subtracting the determined time value converted from the determined net volatility at the particular instance or time period from the stored predetermined initial lifespan value. In various embodiments, the remaining lifespan value calculated based on the time value converted from the net volatility at the particular instance may be stored at the NFC element for each instance in or time period which the remaining lifespan value is determine, as described herein. In various embodiments, the above-described step/operation may be repeated at least substantially continuously, iteratively, and/or periodically at various instances throughout the lifespan of a filter component until the remaining lifespan value associated with the filter component (e.g., the dispersing element) is at least substantially zero.

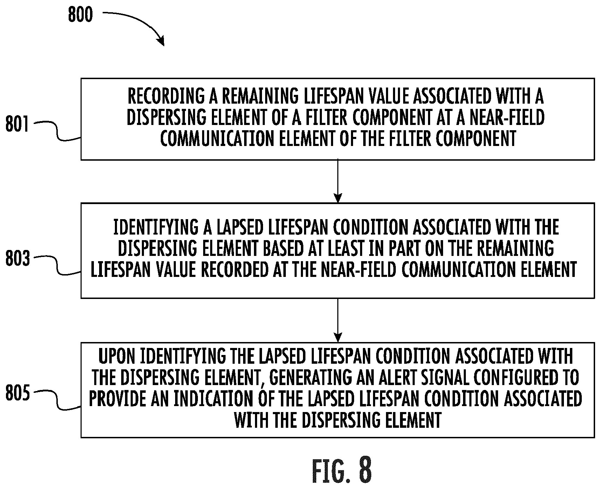

Referring now to FIG. 8, an example method 800 is illustrated. In particular, the example method 800 illustrates example steps/operations of determining a remaining lifespan value for a filter component in accordance with some example embodiments described herein.

In FIG. 8, the example method 800 starts at step/operation 801. In some embodiments, at step/operation 801, the example method 800 comprises recording a remaining lifespan value associated with a dispersing element of a filter component element at a near-field communication element of the filter component. In various embodiments, a remaining lifespan value determined with respect to a dispersing element of a filtration component of an exemplary respiratory protective device may be recorded (e.g., stored) at an NFC element defined by the filtration component. In various embodiments, an output signal defined at least in part by remaining lifespan data (e.g., including the remaining lifespan value associated with the dispersing element and corresponding timestamp data) may be transmitted by one or more communicative components of an exemplary respiratory protective device (e.g., a controller) and received by the NFC element. The remaining lifespan data associated with the dispersing element may be stored on the NFC element. For example, a controller of an exemplary respiratory protective device may be configured to communicate with the NFC element of the filter component to retrieve and/or store various remaining lifespan data corresponding/associated with the filter component (e.g., the dispersing element) of the respiratory protective device to facilitate one or more operations described herein.

In various embodiments, at step/operation 803, the example method 800 comprises identifying a lapsed lifespan condition associated with the dispersing element based at least in part on the remaining lifespan value recorded at the NFC element. For example, a lapsed lifespan condition associated with the dispersing element may be defined by the remaining lifespan value associated with the dispersing element being determined to be below a predetermined minimum level (e.g., at a preemptive warning level and/or when the remaining lifespan value defines a negligible (e.g., zero) value such that the dispersing element has reached its end of service life).

In various embodiments, at step/operation 805, the example method 800 comprises, upon identifying the lapsed lifespan condition associated with the dispersing element, generating an alert signal configured to provide an indication of the lapsed lifespan condition associated with the dispersing element. In various embodiments, an alert signal may be defined by an audio signal (e.g., an alarm, an audio warning, and/or any other sound defining an audibly perceivable communication means), a visual signal (e.g., an LED indicator, a message displayed on a user-accessible interface, and/or any other visually perceivable communication means) that is generated in response to a determination that the lifespan of a filter component (e.g., a dispersing element) has lapsed. For example, an exemplary alert signal may be generated by an exemplary respiratory protective device and emitted therefrom in response to the respiratory protective device (e.g., a controller) identifying that the remaining lifespan value associated with the dispersing element of a filter component is below a predetermined minimum level (e.g., at least substantially zero) based on the determined net volatility associated with the dispersing element, as described herein. In this manner, a user of the exemplary respiratory protective device may be informed/alerted/warned when the filter component (e.g., the dispersing element) may require disposal or repair.

Many modifications and other embodiments will come to mind to one skilled in the art to which this disclosure pertains having the benefit of the teachings presented in the foregoing descriptions and the associated drawings. Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

**Claims**

1. A method of determining a remaining lifespan value for a filter component having a dispersing element configured for use in a respiratory protective device, the method comprising:

   determining a net volatility associated with a dispersing element of a filter component of a respiratory protective device; and
   based at least in part on the net volatility associated with the dispersing element, determining a remaining lifespan value for the filter component;
   wherein the net volatility associated with the dispersing element is determined based at least in part on one or more approximation algorithms defined according to one or more operational characteristics associated with the respiratory protective device.

2. The method of claim 1, further comprising capturing operational data associated with the respiratory protective device at a first instance, wherein the operational data is defined by the one or more operational characteristics.

3. The method of claim 2, wherein the operational data is captured by one or more sensor components defined by the respiratory protective device.

4. The method of claim 1, wherein the one or more operational characteristics comprise one or more of a temperature value, a humidity value, and an air flow value.

5. The method of claim 1, wherein the net volatility associated with the dispersing element is determined based at least in part on a plurality of approximation algorithms defined according to a respective plurality of operational characteristics associated with the respiratory protective device.

6. The method of claim 1, further comprising recording the remaining lifespan value associated with the dispersing element at a near-field communication element of the filter component.

7. The method of claim 6, further comprising:

   identifying a lapsed lifespan condition associated with the dispersing element based at least in part on the remaining lifespan value recorded at the near-field communication element; and
   upon identifying the lapsed lifespan condition associated with the dispersing element, generating an alert signal configured to provide an indication of the lapsed lifespan condition associated with the dispersing element.

8. The method of claim 1, wherein the net volatility associated with the dispersing element is defined at least in part by a first net volatility associated with a first instance, the first net volatility being defined at least in part by a first net evaporation flux, a first humidity influence factor, and an air flow influence factor.

9. The method of claim 8, further comprising:

   calculating the net evaporation flux based at least in part on a first temperature value corresponding to the first instance and a first approximation algorithm;
   calculating the humidity influence factor based at least in part on a first humidity value corresponding to the first instance and a second approximation algorithm; and
   calculating the air flow influence factor based at least in part on a first air flow value corresponding to the first instance and a third approximation algorithm.

10. The method of claim 9, wherein the first humidity influence factor is defined by a ratio of an estimated net evaporation flux defined at the first humidity value to a baseline net evaporation flux defined at a baseline humidity value, wherein the estimated net evaporation flux is determined using the second approximation algorithm.

FIG. 1

**FIG. 2A**

EP 4 356 976 A1

FIG. 2B

FIG. 2C

FIG. 2D

FIG. 3

FIG. 4A

FIG. 4B

FIG. 4D

FIG. 4E

FIG. 5

EP 4 356 976 A1

600

601 — DETERMINING A NET VOLATILITY ASSOCIATED WITH A DISPERSING ELEMENT OF A FILTER COMPONENT OF A RESPIRATORY PROTECTIVE DEVICE

603 — BASED AT LEAST IN PART ON THE NET VOLATILITY ASSOCIATED WITH THE DISPERSING ELEMENT, DETERMINING A REMAINING LIFESPAN VALUE FOR THE FILTER COMPONENT

FIG. 6

700

701 — CAPTURING OPERATIONAL DATA ASSOCIATED WITH A RESPIRATORY PROTECTIVE DEVICE AT A FIRST INSTANCE, THE OPERATIONAL DATA COMPRISING A TEMPERATURE VALUE, A HUMIDITY VALUE, AND AN AIR FLOW VALUE

703 — CALCULATING A NET EVAPORATION FLUX BASED AT LEAST IN PART ON THE TEMPERATURE VALUE AND A FIRST APPROXIMATION ALGORITHM

705 — CALCULATING A HUMIDITY INFLUENCE FACTOR BASED AT LEAST IN PART ON THE FIRST HUMIDITY VALUE AND A SECOND APPROXIMATION ALGORITHM

707 — CALCULATING AN AIR FLOW INFLUENCE FACTOR BASED AT LEAST IN PART ON THE FIRST AIR FLOW VALUE AND A THIRD APPROXIMATION ALGORITHM

709 — DETERMINING A NET VOLATILITY ASSOCIATED WITH A DISPERSING ELEMENT FOR THE FIRST INSTANCE BASED AT LEAST IN PART ON THE NET EVAPORATION FLUX, THE HUMIDITY INFLUENCE FACTOR, AND THE AIR FLOW INFLUENCE FACTOR

711 — DETERMINING A COLLECTIVE NET VOLATILITY ASSOCIATED WITH THE DISPERSING ELEMENT FOR A PERIOD OF TIME BASED AT LEAST IN PART ON A PLURALITY OF NET VOLATILITIES DETERMINED AT A RESPECTIVE PLURALITY OF INSTANCES DEFINED WITHIN THE PERIOD OF TIME

FIG. 7

800

801 — RECORDING A REMAINING LIFESPAN VALUE ASSOCIATED WITH A DISPERSING ELEMENT OF A FILTER COMPONENT AT A NEAR-FIELD COMMUNICATION ELEMENT OF THE FILTER COMPONENT

803 — IDENTIFYING A LAPSED LIFESPAN CONDITION ASSOCIATED WITH THE DISPERSING ELEMENT BASED AT LEAST IN PART ON THE REMAINING LIFESPAN VALUE RECORDED AT THE NEAR-FIELD COMMUNICATION ELEMENT

805 — UPON IDENTIFYING THE LAPSED LIFESPAN CONDITION ASSOCIATED WITH THE DISPERSING ELEMENT, GENERATING AN ALERT SIGNAL CONFIGURED TO PROVIDE AN INDICATION OF THE LAPSED LIFESPAN CONDITION ASSOCIATED WITH THE DISPERSING ELEMENT

FIG. 8

FIG. 9

EP 4 356 976 A1

Europäisches
Patentamt

European
Patent Office

Office européen
des brevets

# EUROPEAN SEARCH REPORT

**Application Number**

EP 23 19 8472

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/327335 A1 (ISHIKAWA SHINGO [JP] ET AL) 12 December 2013 (2013-12-12) <br> * figure 1 * <br> * paragraphs [0097], [0103], [0203], [0205] * | 1-10 | INV. <br> A62B9/00 <br> A62B18/08 <br> A62B19/00 <br> A62B23/02 <br> A62B27/00 |
| X | US 2010/153023 A1 (PARHAM MICHAEL [US] ET AL) 17 June 2010 (2010-06-17) <br> * paragraphs [0020], [0028], [0030] * | 1-10 | |
| X | US 2009/056536 A1 (WRIGHT MICHAEL W [US]) 5 March 2009 (2009-03-05) <br> * paragraphs [0001], [0017] – [0020] * | 1-10 | |
| X | US 2018/311517 A1 (PATIL SWAPNIL GOPAL [IN] ET AL) 1 November 2018 (2018-11-01) <br> * figure 5A * <br> * paragraphs [0029], [0039], [0040], [0051] * | 1-10 | |
| X | US 2004/204915 A1 (STEINTHAL GREGORY [US] ET AL) 14 October 2004 (2004-10-14) <br> * figures 11, 12 * <br> * paragraphs [0145] – [0148] * | 1-10 | TECHNICAL FIELDS SEARCHED (IPC) <br><br> A62B <br> B01D |

The present search report has been drawn up for all claims

| Place of search | Date of completion of the search | Examiner |
|---|---|---|
| The Hague | 14 March 2024 | Almeida, Mariana |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

**EP 23 19 8472**

This annex lists the patent family members relating to the patent documents cited in the above-mentioned European search report.
The members are as contained in the European Patent Office EDP file on
The European Patent Office is in no way liable for these particulars which are merely given for the purpose of information.

**14-03-2024**

| Patent document cited in search report | Publication date | Patent family member(s) | | Publication date |
|---|---|---|---|---|
| US 2013327335 A1 | 12-12-2013 | CN | 103402585 A | 20-11-2013 |
| | | EP | 2682162 A1 | 08-01-2014 |
| | | JP | 5873860 B2 | 01-03-2016 |
| | | JP | WO2012118043 A1 | 07-07-2014 |
| | | KR | 20130092610 A | 20-08-2013 |
| | | PL | 2682162 T3 | 30-04-2018 |
| | | RU | 2013127778 A | 27-12-2014 |
| | | US | 2013327335 A1 | 12-12-2013 |
| | | WO | 2012118043 A1 | 07-09-2012 |
| US 2010153023 A1 | 17-06-2010 | AU | 2009333224 A1 | 07-07-2011 |
| | | CA | 2746695 A1 | 08-07-2010 |
| | | EP | 2365858 A1 | 21-09-2011 |
| | | US | 2010153023 A1 | 17-06-2010 |
| | | WO | 2010078002 A1 | 08-07-2010 |
| US 2009056536 A1 | 05-03-2009 | US | 2009056536 A1 | 05-03-2009 |
| | | US | 2010225134 A1 | 09-09-2010 |
| | | US | 2010231196 A1 | 16-09-2010 |
| | | WO | 2009029426 A1 | 05-03-2009 |
| US 2018311517 A1 | 01-11-2018 | CN | 108430591 A | 21-08-2018 |
| | | EP | 3365077 A1 | 29-08-2018 |
| | | US | 2018311517 A1 | 01-11-2018 |
| | | WO | 2017069756 A1 | 27-04-2017 |
| US 2004204915 A1 | 14-10-2004 | AU | 2004319211 A1 | 10-11-2005 |
| | | CA | 2544311 A1 | 10-11-2005 |
| | | EP | 1687747 A2 | 09-08-2006 |
| | | JP | 2007516515 A | 21-06-2007 |
| | | KR | 20070028293 A | 12-03-2007 |
| | | US | 2004204915 A1 | 14-10-2004 |
| | | WO | 2005106760 A2 | 10-11-2005 |

EPO FORM P0459

For more details about this annex : see Official Journal of the European Patent Office, No. 12/82